# EUROPEAN PATENT APPLICATION

(11) **EP 4 664 268 A1**
(43) Date of publication of application: **17.12.2025**
(21) Application number: 23944903.6
(22) Date of filing: 15.11.2023
(51) Int. Cl.: G06F 3/147

(54) **IMAGE PROCESSING METHOD AND ELECTRONIC DEVICE**

(30) Priority: 12.07.2023 CN 202310851058
(71) Applicant: Honor Device Co., Ltd., Shenzhen, Guangdong 518040 (CN)
(72) Inventor: HUANG, Tonghuan, Shenzhen, Guangdong 518040 (CN); GUO, Daoxin, Shenzhen, Guangdong 518040 (CN); CAI, Lifeng, Shenzhen, Guangdong 518040 (CN)
(74) Representative: Thun, Clemens
(86) International application number: PCT/CN2023/131861
(87) International publication number: WO 2025/010897

(57) **Abstract**

This application provides an image processing method and an electronic device. The method includes: The electronic device allocates different quantities of frame time lines to different applications, so that the applications can select an appropriate composition frame time line based on different scenario requirements, to reduce overheads of frame time lines of some applications when it is ensured that compositing of image frames of the applications is evenly allocated to different frame time line signal periods, so as to improve system resource utilization.

## Description

This application claims priority to Chinese Patent Application No. 202310851058.6, filed with the China National Intellectual Property Administration on July 12, 2023 and entitled "IMAGE PROCESSING METHOD AND ELECTRONIC DEVICE", which is incorporated herein by reference in its entirety.

### TECHNICAL FIELD

This application relates to the field of image processing, that is, display technologies, and in particular, to an image processing method and an electronic device.

### BACKGROUND

With the technical development of the field of terminal devices, application scenarios of a terminal device become wider, and a user may watch a video, take photos, and the like by using the terminal device. Visual continuity of display images of the terminal device for the user is important human-machine interaction performance.

### SUMMARY

This application provides an image processing method and an electronic device. In the method, the electronic device may allocate a corresponding quantity of frame time lines to applications according to different scenario requirements of the applications, to implement integration of compositing of image frames.

According to a first aspect, this application provides an image processing method. The method includes: A first application draws a first image frame. The first application sends a first compositing request to an image compositing system after completing drawing the first image frame. The image compositing system allocates N1 frame time lines frame time lines to the first application at a first time in response to the received first compositing request, where any two adjacent frame time lines in the N1 frame time lines are separated by a Vsync period corresponding to the first application, and a start time of a 1^{st} frame time line in the N1 frame time lines is after the first time. The first application selects a first target frame time line from the N1 frame time lines, where a start time of the first target frame time line is a second time. Next, the image compositing system obtains the first target frame time line and the first image frame. The image compositing system composites the first image frame based on the first target frame time line at the second time. A second application draws a second image frame. The second application sends a second compositing request to the image compositing system after completing drawing the second image frame. The image compositing system allocates M1 frame time lines to the second application at a third time in response to the second compositing request, where any two adjacent frame time lines in the M1 frame time lines are separated by a Vsync period corresponding to the second application, and a start time of a 1^{st} frame time line in the M1 frame time lines is after the third time. N1 is a positive integer within a first preset range, M1 is a positive integer within a second preset range, and a minimum value of the first preset range is greater than a maximum value of the second preset range. Next, the second application selects a second target frame time line from the M1 frame time lines, where a start time of the second target frame time line is a fourth time. The image compositing system obtains the second target frame time line and the second image frame. The image compositing system composites the second image frame based on the second target frame time line at the fourth time. In this way, in this application, different quantities of frame time lines are allocated to applications according to scenario requirements of different applications. When a need of the first application for more frame time lines is satisfied, to ensure even distribution of composited frames of the first application and avoid unstable display, fewer frame time lines are allocated to the second application according to a requirement feature of the second application, to reduce overheads of transmitting frame time line information, reduce a resource waste, and reduce calculation pressure of the image compositing system on a frame time line.

For example, the first application and the second application may be simultaneously displayed on a screen.

For example, the first image frame and the second image frame are drawn in any order.

For example, the Vsync period of the first application is the same as or different from the Vsync period of the second application.

For example, the 1^{st} frame time line in a plurality of frame time lines allocated by the image compositing system to the first application is a frame time line that is after the first time and is closest to the first time.

For example, the first time may be any time within the Vsync period of the first application.

In a possible implementation, the method further includes: The first application draws a third image frame. The first application sends a third compositing request to the image compositing system after completing drawing the third image frame. The image compositing system allocates N2 frame time lines to the first application at a fifth time in response to the third compositing request, where any two adjacent frame time lines in the N2 frame time lines are separated by the Vsync period corresponding to the first application, a start time of a 1^{st} frame time line in the N2 frame time lines is the same as the start time of the 1^{st} frame time line in the N1 frame time lines, and N2 is a positive integer within the first preset range. The first application selects a third target frame time line from the N2 frame time lines, where a start time of the third target frame time line is a sixth time. The image compositing system obtains the third target frame time line and the third image frame. The image compositing system composites the third image frame based on the third target frame time line at the sixth time. In this way, for image frames that are completely drawn within a same signal period, because the image compositing system provides a plurality of frame time lines for applications to select, the image frames within the same signal period of the applications can be evenly allocated to different frame time lines for compositing, so as to implement integration of compositing of the image frames.

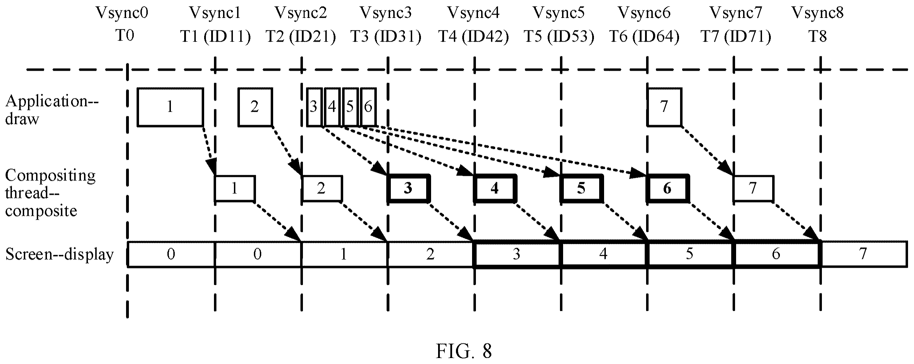

For example, the first image frame may be the frame 5 in FIG. 8, and the third image frame may be the frame 6 in FIG. 8.

In a possible implementation, the third target frame time line is adjacent to the second target frame time line. In this way, an application can select an appropriate frame time line for image frames within a same signal period, so that two adjacent image frames can be composited in two adjacent frame time lines, to avoid frame drop.

In a possible implementation, the method further includes: A screen displays the first image frame at the sixth time; and the screen displays the third image frame at a seventh time, where an interval between the seventh time and the sixth time is the Vsync period corresponding to the first application. In this way, in this application, compositing of image frames is integrated, so that the compositing of the image frames is allocated to different frame time lines, and further, the screen can display the image frames frame by frame according to a drawing order of the image frames, thereby avoiding frame drop and frame freezing.

In a possible implementation, the method further includes: A third application draws a fourth image frame; the third application sends a fourth compositing request to the image compositing system after completing drawing the fourth image frame; the image compositing system allocates P frame time lines to the third application at an eighth time in response to the fourth compositing request, where any two adjacent frame time lines in the P frame time lines are separated by a Vsync period corresponding to the third application, and a start time of a 1^{st} frame time line in the P frame time lines is after the eighth time, where P is a positive integer within a third preset range, the minimum value of the first preset range is greater than a maximum value of the third preset range, and a minimum value of the third preset range is greater than the maximum value of the second preset range; the third application selects a fourth target frame time line from the P frame time lines, where a start time of the fourth target frame time line is a ninth time; the image compositing system obtains the fourth target frame time line and the fourth image frame; and the image compositing system composites the fourth image frame based on the fourth target frame time line at the ninth time. In this way, in this application, different quantities of frame time lines can be set for different types of applications, to satisfy requirements of different applications.

For example, the third application is optionally a game application.

In a possible implementation, the method further includes: The second application draws a fifth image frame; the second application sends a fifth compositing request to the image compositing system after completing drawing the fifth image frame; the image compositing system obtains a slide-touch event; the image compositing system allocates M2 frame time lines to the second application at a tenth time in response to the fifth compositing request and the slide-touch event, where any two adjacent frame time lines in the M2 frame time lines are separated by the Vsync period corresponding to the second application, a start time of a 1^{st} frame time line in the M2 frame time lines is after the tenth time, and M2 is a positive integer within the first preset range; the second application selects a fifth target frame time line from the M2 frame time lines, where a start time of the fifth target frame time line is an eleventh time; the image compositing system obtains the fifth target frame time line and the fifth image frame; and the image compositing system composites the fifth image frame based on the fifth target frame time line at the eleventh time. In this way, image frames of a same application may be evenly or unevenly drawn in different scenarios. For example, a plurality of image frames may be drawn within a same signal period. Correspondingly, in this application, the slide-touch event is monitored, so that more frame time lines are allocated to an application when image frames may be unevenly drawn possibly caused by a slide event, to avoid frame drop and frame freezing.

In a possible implementation, the method further includes: The second application draws a sixth image frame; the second application sends a sixth compositing request to the image compositing system after completing drawing the sixth image frame; at a twelfth time, the image compositing system detects, in response to the sixth compositing request, whether the sixth image frame includes dynamic image data; M3 frame time lines are allocated to the second application if the sixth image frame includes the dynamic image data, where any two adjacent frame time lines in the M3 frame time lines are separated by the Vsync period corresponding to the second application, a start time of a 1^{st} frame time line in the M3 frame time lines is after the twelfth time, and M3 is an integer within the first preset range; M4 frame time lines are allocated to the second application if the sixth image frame does not include the dynamic image data, where any two adjacent frame time lines in the M4 frame time lines are separated by the Vsync period corresponding to the second application, a start time of a 1^{st} frame time line in the M4 frame time lines is after the twelfth time, and M4 is an integer within the second preset range; the second application selects a sixth target frame time line from the M3 frame time lines or the M4 frame time lines, where a start time of the sixth target frame time line is a thirteenth time; the image compositing system obtains the sixth target frame time line and the sixth image frame; the image compositing system composites the sixth image frame based on the sixth target frame time line at the thirteenth time. In this way, in this application, according to different image frames of a same application, corresponding quantities of frame time lines may be allocated to the application. When the image frames of the application include dynamic data, and uneven drawing of the image frames may occur, more frame time lines are allocated to the application, to avoid frame drop and frame freezing.

In a possible implementation, the first application is a video application or a camera application, and the second application is a news application. In this way, in this application, for an application of a video stream type like the video application or the camera application, more frame time lines may be allocated to the application, to ensure stability of image frame display. For an application whose image frame is mainly static data, like a chat application or the news application, fewer frame time lines may be allocated to the application, to reduce a resource waste.

In a possible implementation, the minimum value of the first preset range is 7, and the maximum value of the second preset range is 3. For example, N1 may be 7, and M1 may be 3.

According to a second aspect, this application provides an electronic device, including: one or more processors and a memory; and one or more computer programs. The one or more computer programs are stored in the memory. When the computer programs are executed by the one or more processors, the electronic device is enabled to perform the following steps: drawing a first image frame of a first application; allocating N1 frame time lines frame time lines to the first application at a first time, where any two adjacent frame time lines in the N1 frame time lines are separated by a vertical synchronization Vsync period corresponding to the first application, and a start time of a 1^{st} frame time line in the N1 frame time lines is after the first time, where a first compositing request is sent after the first application draws the first image frame; selecting a first target frame time line from the N1 frame time lines, where a start time of the first target frame time line is a second time; compositing the first image frame based on the first target frame time line at the second time; drawing a second image frame of a second application; allocating M1 frame time lines to the second application at a third time, where any two adjacent frame time lines in the M1 frame time lines are separated by a Vsync period corresponding to the second application, and a start time of a 1^{st} frame time line in the M1 frame time lines is after the third time, where N1 is a positive integer within a first preset range, M1 is a positive integer within a second preset range, and a minimum value of the first preset range is greater than a maximum value of the second preset range; selecting a second target frame time line from the M1 frame time lines, where a start time of the second target frame time line is a fourth time; and compositing the second image frame based on the second target frame time line at the fourth time.

In a possible implementation, when the computer programs are executed by the one or more processors, the electronic device is enabled to perform the following steps: drawing a third image frame of the first application; allocating N2 frame time lines to the first application at a fifth time, where any two adjacent frame time lines in the N2 frame time lines are separated by the Vsync period corresponding to the first application, a start time of a 1^{st} frame time line in the N2 frame time lines is the same as the start time of the 1^{st} frame time line in the N1 frame time lines, and N2 is a positive integer within the first preset range; selecting a third target frame time line from the N2 frame time lines, where a start time of the third target frame time line is a sixth time; and compositing the third image frame based on the third target frame time line at the sixth time.

In a possible implementation, the third target frame time line is adjacent to the second target frame time line.

In a possible implementation, when the computer programs are executed by the one or more processors, the electronic device is enabled to perform the following steps: displaying the first image frame at the sixth time; and displaying the third image frame at a seventh time, where an interval between the seventh time and the sixth time is the Vsync period corresponding to the first application.

In a possible implementation, when the computer programs are executed by the one or more processors, the electronic device is enabled to perform the following steps: drawing a fourth image frame of the second application; obtaining a slide-touch event; allocating M2 frame time lines to the second application at an eighth time, where any two adjacent frame time lines in the M2 frame time lines are separated by the Vsync period corresponding to the second application, a start time of a 1^{st} frame time line in the M2 frame time lines is after the eighth time, and M2 is a positive integer within the first preset range; selecting a fourth target frame time line from the M2 frame time lines, where a start time of the fourth target frame time line is a ninth time; and compositing the fourth image frame based on the fourth target frame time line at the ninth time.

In a possible implementation, when the computer programs are executed by the one or more processors, the electronic device is enabled to perform the following steps: drawing a fifth image frame of the second application; detecting, at a tenth time, whether the fifth image frame includes dynamic image data; allocating M3 frame time lines to the second application if the fifth image frame includes the dynamic image data, where any two adjacent frame time lines in the M3 frame time lines are separated by the Vsync period corresponding to the second application, a start time of a 1^{st} frame time line in the M3 frame time lines is after the tenth time, and M3 is an integer within the first preset range; allocating M4 frame time lines to the second application if the fifth image frame does not include the dynamic image data, where any two adjacent frame time lines in the M4 frame time lines are separated by the Vsync period corresponding to the second application, a start time of a 1^{st} frame time line in the M4 frame time lines is after the tenth time, and M4 is an integer within the second preset range; selecting a fifth target frame time line from the M3 frame time line or the M4 frame time line, where a start time of the fifth target frame time line is an eleventh time; and compositing the fifth image frame based on the fifth target frame time line at the eleventh time.

Any one of the second aspect and the implementations of the second aspect corresponds to any one of the first aspect and the implementations of the first aspect respectively. For technical effects of any one of the second aspect and the implementations of the second aspect, refer to the technical effects corresponding to any one of the first aspect and the implementations of the first aspect. Details are not described herein.

According to a third aspect, this application provides a computer-readable medium, configured to store a computer program. The computer program includes instructions for performing the method according to any one of the first aspect or the possible implementations of the first aspect.

According to a fourth aspect, this application provides a computer program. The computer program includes instructions for performing the method according to any one of the first aspect or the possible implementations of the first aspect.

According to a fifth aspect, this application provides a chip. The chip includes a processing circuit and a transceiver pin. The transceiver pin and the processing circuit communicate with each other through an internal connection path. The processing circuit performs the method according to any one of the first aspect or the possible implementations of the first aspect, to control a receive pin to receive a signal, and control a transmit pin to transmit a signal.

### BRIEF DESCRIPTION OF DRAWINGS

FIG. 1 is a schematic diagram of an example of a hardware structure of an electronic device;
FIG. 2 is a schematic diagram of an example of a software structure of an electronic device;
FIG. 3 is a schematic diagram of an example of an interface display processing procedure;
FIG. 4 is a schematic diagram of an example of an interface display processing procedure;
FIG. 5 is a schematic flowchart of an example of an image processing method;
FIG. 6 is a schematic diagram of an example of obtaining a frame time line;
FIG. 7 is a schematic diagram of an example of an interface display processing procedure;
FIG. 8 is a schematic diagram of an example of an interface display processing procedure;
FIG. 9 is a schematic diagram of an example of frame time line selection;
FIG. 10 is a schematic diagram of an example of frame time line selection;
FIG. 11 is a schematic diagram of an example of frame time line selection;
FIG. 12 is a schematic diagram of an example of frame time line selection;
FIG. 13 is a schematic diagram of an example of frame time line selection;
FIG. 14 is a schematic diagram of an example of frame time line selection;
FIG. 15 is a schematic diagram of an example of an interface display processing procedure;
FIG. 16 is a schematic diagram of an example of an interface display processing procedure;
FIG. 17 is a schematic diagram of an example of frame time line selection;
FIG. 18 is a schematic flowchart of an example of an image processing method;
FIG. 19 is a schematic diagram of an example of a user interface;

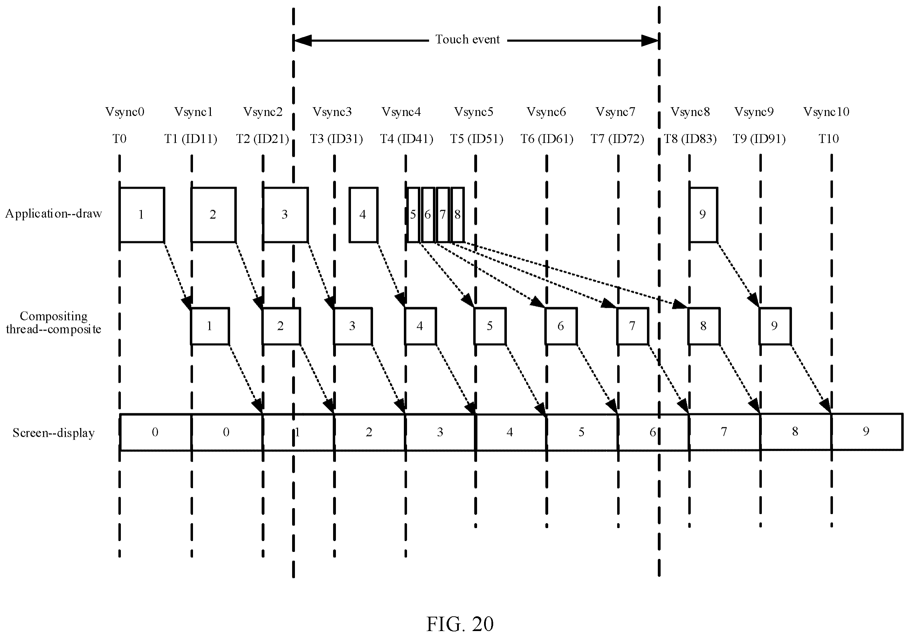

FIG. 20 is a schematic diagram of an example of an interface display processing procedure;
FIG. 21 is a schematic diagram of an example of a user interface; and
FIG. 22 is a schematic diagram of an example of a structure of an apparatus.

### DESCRIPTION OF EMBODIMENTS

The following clearly and completely describes technical solutions in embodiments of this application with reference to the accompanying drawings in embodiments of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular sequence of the objects. For example, a first target object, a second target object, and the like are used to distinguish between different target objects, rather than describing a particular sequence of the target objects.

In embodiments of this application, the term such as "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the term such as "example" or "for example" is intended to present a related concept in a specific manner.

In the description of embodiments of this application, unless otherwise stated, "a plurality of" means two or more. For example, a plurality of processing units refer to two or more processing units; and a plurality of systems refer to two or more systems.

The frame time line-based control method provided in embodiments of this application may be applied to an electronic device having a display function. The electronic device includes a terminal device. The electronic device may also be referred to as a terminal (terminal), user equipment (user equipment, UE), a mobile station (mobile station, MS), a mobile terminal (mobile terminal, MT), or the like. The electronic device may be a mobile phone (mobile phone), a smart television, a wearable device, a tablet computer (Pad), a computer having a wireless transmission and receiving function, a virtual reality (virtual reality, VR) electronic device, an augmented reality (augmented reality, AR) electronic device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used for the electronic device are not limited in embodiments of this application.

To help better understand this embodiment of this application, the following describes a structure of an electronic device in embodiments of this application.

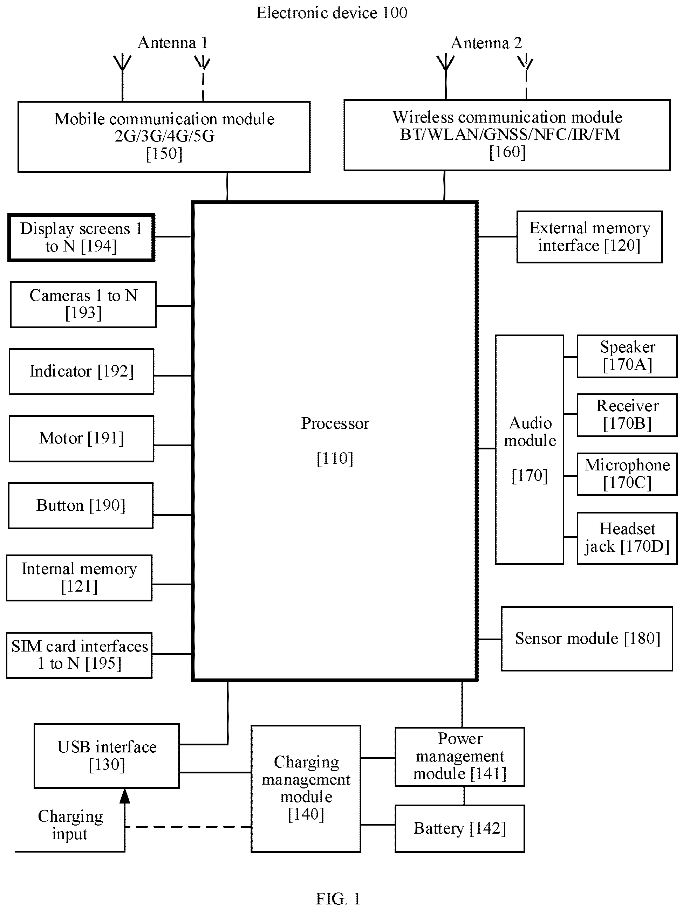

FIG. 1 is a schematic diagram of a structure of an electronic device 100. It should be understood that the electronic device 100 shown in FIG. 1 is merely an example of an electronic device, and the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The illustrated components may be implemented by hardware, software, or a combination of software and hardware.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 100. The controller may generate an operation control signal based on instruction operation code and a sequence signal, and control obtaining and executing of instructions.

A memory configured to store instructions and data may be further disposed in the processor 110. In some embodiments, the memory in the processor 110 is a cache memory. The memory may store instructions or data that is recently used or cyclically used by the processor 110. If the processor 110 needs to use the instructions or the data again, the processor may directly invoke the instructions or the data from the memory, Repeated access is avoided, and waiting time of the processor 110 is reduced, thereby improving efficiency of the system.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a bidirectional synchronization serial bus, and includes a serial data line (serial data line, SDA) and a serial clock line (derail clock line, SCL). In some embodiments, the processor 110 may include a plurality of I2C buses. The processor 110 may be separately coupled to the touch sensor 180K, a charger, a flash, the camera 193, and the like via different I2C bus interfaces. For example, the processor 110 may be coupled to the touch sensor 180K by using the I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of I2S buses. The processor 110 may be coupled to the audio module 170 via the I2S bus to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be used for audio communication to sample, quantize, and encode an analog signal. In some embodiments, the audio module 170 may be coupled to the wireless communication module 160 via the PCM bus interface. In some embodiments, the audio module 170 may alternatively transmit an audio signal to the wireless communication module 160 via the PCM interface, to implement a function of answering a call by using the Bluetooth earphones. The I2S interface and the PCM interface both may be configured to perform audio communication.

The UART interface is a universal serial data bus for asynchronous communication. The bus may be a bidirectional communications bus. The bus converts to-be-transmitted data between serial communication and parallel communication. In some embodiments, the UART interface is generally configured to connect the processor 110 to the wireless communication module 160. For example, the processor 110 communicates with a Bluetooth module in the wireless communication module 160 via the UART interface, to implement a Bluetooth function. In some embodiments, the audio module 170 may transmit an audio signal to the wireless communication module 160 via the UART interface, to implement a function of playing music by using the Bluetooth earphones.

The MIPI interface may be configured to connect the processor 110 to peripheral components such as the display screen 194 and the camera 193. The MIPI interface includes a camera serial interface (camera serial interface, CSI), a display serial interface (display serial interface, DSI), and the like. In some embodiments, the processor 110 communicates with the camera 193 via the CSI interface, to implement a photographing function of the electronic device 100. The processor 110 communicates with the display screen 194 via the DSI interface, to implement a display function of the electronic device 100.

The GPIO interface may be configured by software. The GPIO interface may be configured as a control signal, or may be configured as a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with a USB standard specification, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device. The USB interface may alternatively be configured to connect to earphones, to play audio through the earphones. The interface may alternatively be configured to connect to another electronic device, for example, an AR device.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from a charger. The charger may be a wireless charger or a wired charger. In some embodiments of wired charging, the charging management module 140 may receive a charging input from the wired charger via the USB interface 130. In some embodiments of wireless charging, the charging management module 140 may receive wireless charging inputted by using a wireless charging coil of the electronic device 100. When charging the battery 142, the charging management module 140 may further supply power to the electronic device by using the power management module 141.

The power management module 141 is configured to be connected to the battery 142, the charging management module 140, and the processor 110. The power management module 141 receives input from the battery 142 and/or the charging management module 140, and supplies power to the processor 110, the internal memory 121, an external memory, the display screen 194, the camera 193, the wireless communication module 160, and the like. The power management module 141 may be further configured to monitor parameters such as a battery capacity, a quantity of battery cycles, and a battery health state (power leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may be further multiplexed to improve utilization of the antennas. For example, the antenna 1 may be reused as a diversity antenna of a wireless local area network. In some other embodiments, the antenna may be used with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave via the antenna 1, perform processing such as filtering and amplification on the received electromagnetic wave, and transmit the electromagnetic wave to the modem processor for demodulation. The mobile communication module 150 may further amplify a signal modulated by the modem processor. The amplified signal is converted into an electromagnetic wave and radiated out via the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a low frequency baseband signal to be sent into a medium and high frequency signal. The demodulator is configured to demodulate the received electromagnetic wave signal into a low-frequency baseband signal. Then, the demodulator transmits the low frequency baseband signal obtained through demodulation to the baseband processor for processing. After being processed by the baseband processor, the low frequency baseband signal is transmitted to the application processor. The application processor outputs a sound signal through an audio device (not limited to the speaker 170A, the receiver 170B, or the like), or displays an image or a video by using the display screen 194. In some embodiments, the modem processor may be an independent component. In some other embodiments, the modem processor may be independent of the processor 110, and disposed in a same component with the mobile communication module 150 or another functional module.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation on the electromagnetic wave signal and filters the electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device through a wireless communication technology. The wireless communication technology may include a technology such as a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function through the GPU, the display screen 194, the application processor, and the like. The GPU is a microprocessor for image processing and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diode (quantum dot light emitting diodes, QLED), or the like. In some embodiments, the electronic device 100 may include one or N display screens 194, where N is a positive integer greater than 1.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is opened, light is transmitted to a photosensitive element of the camera through a lens, and an optical signal is converted into an electrical signal. The photosensitive element of the camera transmits the electrical signal to the ISP for processing, so that the ISP converts the electrical signal into an image visible to naked eyes. The ISP can further perform algorithm optimization on noise, luminance, and a skin color of the image. The ISP can further optimize parameters of a photography scene, such as an exposure and a color temperature. In some embodiments, the ISP may be disposed in the camera 193.

The camera 193 is configured to capture a still image or a video. The lens generates an optical image for an object, and the optical image is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB and YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to: compress or decompress a digital video. The electronic device 100 may support one or more video codecs. In this way, the electronic device 100 may play or record a video in a plurality of encoding formats, for example, moving picture experts group (moving picture experts group, MPEG) 1, MPEG 2, MPEG 3, and MPEG 4.

The external memory interface 120 may be configured to connect to an external memory card, such as a micro SD card, to expand a storage capability of the electronic device 100. The external storage card communicates with the processor 110 via the external memory interface 120, to implement a data storage function. For example, files such as music and a video are stored on the external storage card.

The internal memory 121 may be configured to store computer executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (such as a sound playback function and an image display function), and the like. The data storage area may store data (for example, audio data or a phone book) created in a process of using the electronic device 100. In addition, the internal memory 121 may include a high-speed random access memory, and may further include a nonvolatile memory, for example, at least one magnetic disk storage component, a flash memory component, or a universal flash storage (universal flash storage, UFS).

The electronic device 100 may implement audio functions by using the audio module 170, the speaker 170A, the receiver 170B, the microphone 170C, the headset jack 170D, the application processor, for example, implement a music playback function and a recording function.

The sensor module 180 may include, but is not limited to, a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch panel". The touch sensor may be disposed on the display screen 194. The touch sensor and the display screen 194 form a touchscreen, which is also referred to as a "touch control screen". The touch sensor is configured to detect a touch operation performed on or near the touch sensor. The touch sensor may transfer the detected touch operation to the application processor, to determine a type of a touch event. Visual output related to the touch operation may be provided by using the display screen 194. In some other embodiments, the touch sensor may alternatively be disposed on a surface of the electronic device 100, and is located at a position different from that of the display screen 194.

A software system of an electronic device 100 may use a layered architecture, an event-driven architecture, a microkernel architecture, a micro service architecture, or a cloud architecture. In this embodiment of this application, the software structure of the electronic device 100 is described by using an Android system with a layered architecture as an example.

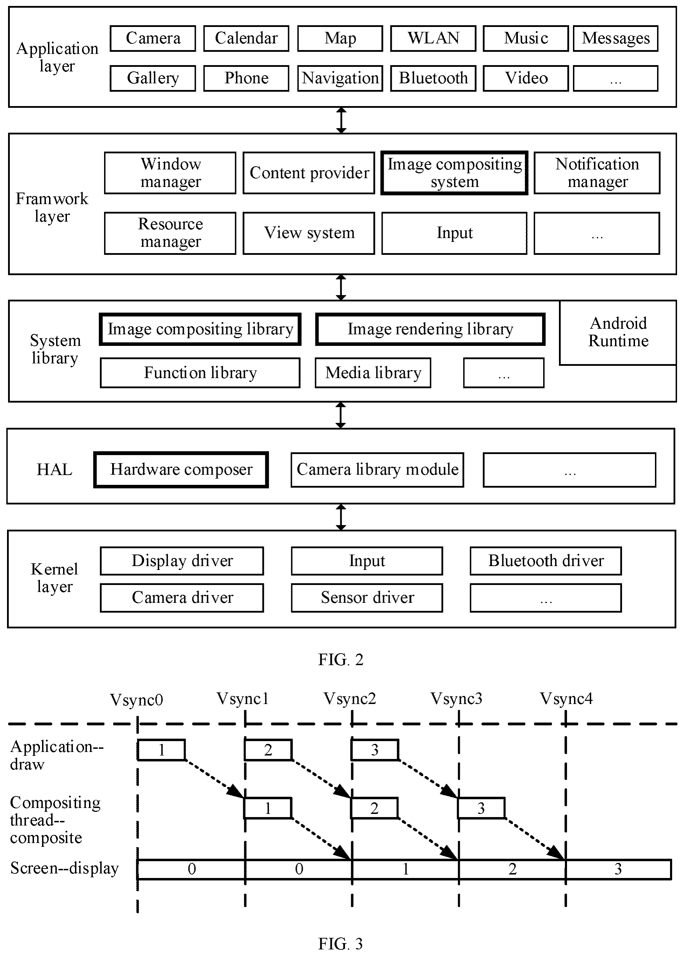

FIG. 2 is a block diagram of the software structure of the electronic device 100 according to an embodiment of this application.

In a layered architecture of the electronic device 100, software is divided into several layers, and each layer has a clear role and responsibility. The layers communicate with each other through a software interface. In some embodiments, the Android system is divided into five layers, namely, an application layer, an application framework layer, Android runtime (Android runtime) and a system library, a hardware abstraction layer, and a kernel layer from top to bottom.

The application layer may include a series of application packages.

As shown in FIG. 2, the application packages may include applications such as Camera, Gallery, Calendar, Call, Map, Navigation, WLAN, Bluetooth, Music, Video, and Messages.

The application framework layer provides an application programming interface (application programming interface, API) and a programming framework for the applications in the application layer. The application framework layer includes some predefined functions.

As shown in FIG. 2, the application framework layer may include a window manager, a content provider, a view system, a resource manager, a notification manager, an image compositing system, an Input (Input) module, and the like.

The window manager is configured to manage a window program. The window manager may obtain a size of a display screen, determine whether there is a status bar, perform screen locking, perform screen capturing, and so on.

The content provider is configured to store and obtain data, and enable the data to be accessible to an application. The data may include a video, an image, audio, phone calls made and answered, a browsing history and a bookmark, a phone book, and the like.

The view system includes visual controls, such as a control for displaying text and a control for displaying a picture. The view system may be configured to build an application. A display interface may include one or more views. For example, a display interface including a short message notification icon may include a view for displaying text and a view for displaying a picture.

The image compositing system is configured to control image compositing and to generate a vertical synchronization (Vsync) signal.

The image compositing system includes a compositing thread, a Vsync thread, and a queue buffer (queue buffer) thread. The compositing thread is configured to be awakened by the Vsync signal for compositing. The Vsync thread is configured to generate a next Vsync signal based on a Vsync signal request. The queue buffer thread is configured to store a buffer, generate a Vsync signal request, wake up the compositing thread, and the like.

The resource manager provides various resources, such as a localized character strings, icons, pictures, layout files, and video files, for applications.

The notification manager enables an application to display notification information in a status bar. The notification messages may be used for conveying an informative message that may disappear automatically after a short period of time without user interaction. For example, the notification manager is used for informing completion of downloading, providing a message reminder, and the like. The notification manager may alternatively provide, on a status bar at the top of the system, a notification in a form of a chart or scroll bar text, for example, a notification of an application running in the background, or provide, on a screen, a notification in a form of a dialog window. For example, text information is prompted in the status bar, a prompt tone is produced, the electronic device vibrates, or an indicator light flashes.

The Input module may be configured to obtain a touch event of a touch sensor from a sensor driver. The touch event includes, but is not limited to, a touch position (also referred to as touch coordinates). The touch position is usually corresponding position coordinates in a coordinate system established by using the upper left corner of a screen as an origin. For a data exchange procedure among the touch sensor, the sensor driver, and the Input module, refer to an existing technology. Details are not described in this application.

The Android runtime includes a kernel library and a virtual machine. The Android runtime is responsible for scheduling and managing an Android system.

The kernel library includes two parts. One part is a functional function that needs to be invoked by the java language, and the other part is an Android kernel library.

The application layer and the application framework layer are run in the virtual machine. The virtual machine executes Java files of the application layer and the application framework layer as binary files. The virtual machine is used to execute functions such as object lifecycle management, stack management, thread management, security and exception management, and garbage collection.

The system library may include a plurality of functional modules, such as an image rendering library, an image compositing library, a function library, and a media library (Media Libraries).

The image rendering library is configured to render a two-dimensional or three-dimensional image.

The image compositing library is configured to composite a two-dimensional or three-dimensional image.

Optionally, an application draws and renders an image by using the image rendering library, and then the application transmits the image drawn and rendered to a queue buffer of the image compositing system. Each time a Vsync signal arrives, the image compositing system (for example, surface flinger) obtains, in sequence, a frame of to-be-composited image from the queue buffer, and then performs image compositing by using the image compositing library.

The function library provides macros, type definitions, string operation functions, mathematical calculation functions, input/output functions, and the like used in the C language.

The media library supports playback and recording of a plurality of commonly used audio and video formats, static image files, and the like. The media library may support a plurality of audio and video encoding formats, for example, MPEG 4, H.264, MP3, AAC, AMR, JPG, and PNG.

The hardware abstraction layer may include a plurality of library modules. The library module may be, for example, a hardware composer (hwcomposer, HWC) and a camera library module. The Android system may load a corresponding library module for device hardware, and then achieve an objective of accessing the device hardware by the application framework layer. The device hardware may include, for example, an LCD display screen and a camera in the electronic device.

The kernel layer is a layer between hardware and software. The kernel layer includes at least a display driver, a camera driver, an audio driver, a sensor driver (for example, a touch panel (touch panel, TP) driver), and the like.

It may be understood that the layers in the software structure shown in FIG. 2 and components included in the layers do not constitute a specific limitation on the electronic device 100. In some other embodiments of this application, the electronic device 100 may include more or fewer layers than those shown in the figure, and each layer may include more or fewer components. This is not limited in this application.

For ease of understanding, some concepts related to embodiments of this application are exemplified for reference.

1. Frame: The frame is a single picture of a smallest unit in interface display. One frame may be understood as a still picture, and displaying a plurality of consecutive frames in rapid succession may form a false phenomenon of motion of an object. A frame rate refers to a frame number of pictures refreshed in one second, and may also be understood as a quantity of times a graphics processing unit refreshes the picture per second in the electronic device. A smoother and more realistic animation may be obtained at a higher frame rate. More frames per second indicate a smoother displayed action.

It should be noted that drawing, rendering, compositing, and other processes may be performed before an interface displays a frame.

2. Frame drawing: The frame drawing is picture drawing of a display interface. The display interface may include one or more views. Each view may be drawn by a visual control of a view system. Each view includes sub-views. One sub-view corresponds to one part in the view. For example, one sub-view corresponds to one symbol in a picture view.

3. Frame rendering: The frame rendering is, for example, performing a coloring operation on or adding a 3D effect to a drawn view. For example, the 3D effect may be a lighting effect, a shadow effect, a texture effect, or the like.

4. Frame compositing: The frame compositing is a process of compositing one or more rendered views into a display interface.

For example, to improve display fluency and reduce display freezing and the like, an electronic device generally performs displaying based on a frame time line (frame time line) (for example, a Vsync signal), to synchronize processes such as drawing, rendering, and compositing of an image and screen refresh for display. It should be noted that the Vsync signal in this embodiment of this application may be replaced with a frame time line and may be understood as a signal in the frame time line.

It may be understood that the Vsync signal is a periodic signal, and a Vsync signal period may be set based on a screen refresh rate. For example, when the screen refresh rate is 60 Hz, the Vsync signal period may be 16.6 ms (or 16.67 ms), to be specific, the electronic device generates a control signal every 16.6 ms to trigger the Vsync signal period.

It should be noted that the Vsync signal may be classified into a software Vsync signal and a hardware Vsync signal. The software Vsync signal includes Vsync_APP and Vsync_SF. Vsync-APP is used to trigger a drawing and rendering procedure. Vsync-SF is used to trigger a compositing procedure. The hardware Vsync signal (Vsync-HW) is used to trigger a screen display refresh procedure. Optionally, in this embodiment of this application, the Vsync signal periods corresponding to applications may be the same or different. This is not limited in this application.

Generally, the software Vsync signal and the hardware Vsync signal are synchronous in period. A change between 60 Hz and 120 Hz is used as an example. If Vsync-HW is switched from 60 Hz to 120 Hz, Vsync-APP and Vsync-SF synchronously change from 60 Hz to 120 Hz.

For example, FIG. 3 is a schematic diagram of an example of an interface display processing procedure of an electronic device. In chronological order, images displayed by the electronic device correspond to a frame 1, a frame 2, and a frame 3 in sequence.

Specifically, using display of the frame 1 as an example, an application of the electronic device draws and renders the frame 1 through a view system at an application framework layer. After the frame 1 is drawn, the application of the electronic device sends the drawn frame 1 to an image compositing system (for example, surface flinger). It should be noted that the "drawing" in this embodiment of this application may be understood as a drawing and rendering process. This is not repeated below.

The image compositing system composites the drawn frame 1. After the frame 1 is composited, the electronic device may start a display driver by calling a kernel layer, to display, on a screen (a display screen), content corresponding to the frame 1. The frame 2 and the frame 3 are also composited and displayed in a similar process to the frame 1. Details are not described herein again.

As shown in FIG. 3, there is one Vsync signal period between drawing and compositing of each frame, that is, the compositing lags behind the drawing by one Vsync signal period. There is one Vsync signal period between the compositing and displaying, that is, the displaying lags behind the compositing by one Vsync signal period. In other words, the displaying lags behind the drawing by two Vsync signal periods, and the electronic device has lags in a process of displaying image frames.

Still with reference to FIG. 3, in some embodiments, image frames corresponding to some applications (such as a setting application and a chat application) in the electronic device or some subprograms (or referred to as sub-functions) in an application are uniformly generated. As shown in FIG. 3, using the setting application as an example, when a user browses a display interface of the setting application, each image frame (for example, the frame 1) of the setting application starts to be drawn at a triggering time of a Vsync signal period (for example, Vsync0), starts to be composited at a triggering time of a next adjacent Vsync signal period (for example, Vsync1), and starts to be displayed at a triggering time of a next subsequent Vsync signal period (for example, Vsync2).

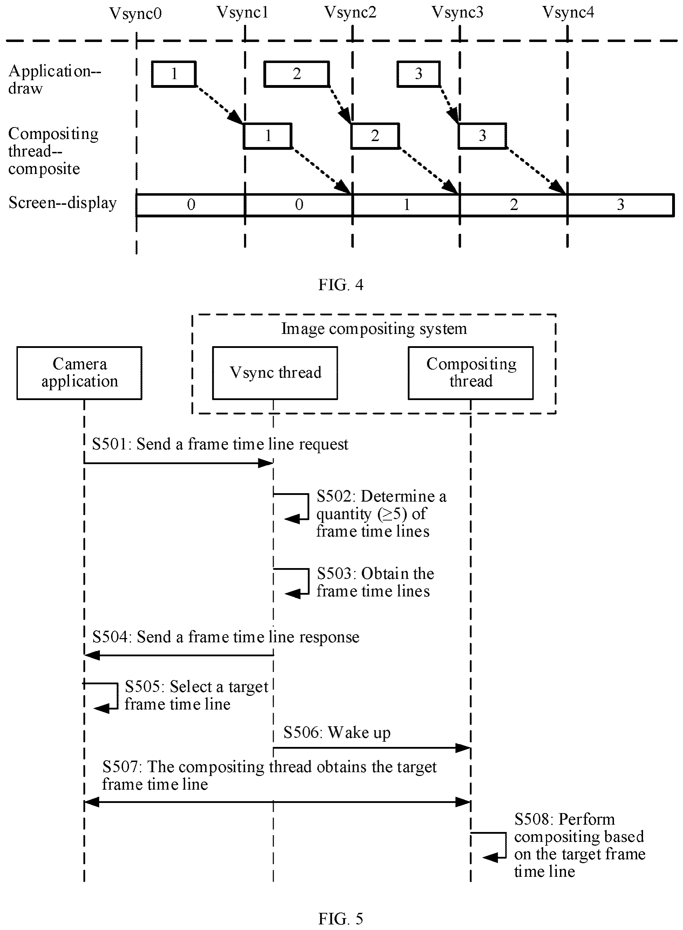

As shown in FIG. 4, in some examples, image frames corresponding to some applications (for example, a game application, a camera application, or a video application) in the electronic device or some subprograms (such as video functions in the chat application) in an application are generated unevenly. With reference to FIG. 4. The electronic device draws a frame 1 within a Vsync0 signal period, composites the frame 1 at a triggering time of a Vsync1 signal period, and displays the frame 1 at a triggering time of a Vsync2 signal period. In this example, the compositing of the image frames also lags behind the drawing by one signal period, and the displaying of the image frames lags behind the compositing by one signal period. However, due to limitations of an amount of image data of the image frame and a processing capability (for example, a CPU is occupied) of the CPU (or a GPU), drawing of the image frame may be uneven. In some examples, during the drawing of the image frame, a case in which a plurality of frames are drawn in a same signal period, or drawing of one image frame occupies two or more signal periods may occur (where a specific case is described below). To ensure continuity of display images of a terminal device, the terminal device uses a frame time line (frame time line) to control processing procedures of image frames in the electronic device. How to properly set the frame time line becomes one of important factors for whether image frames can be displayed consecutively.

FIG. 5 is a schematic diagram of an example of an interface display processing procedure. With reference to FIG. 5, the following steps are specifically included, but this is not limited thereto.

S401: A camera application sends a frame time line request to a Vsync thread.

For example, with reference to FIG. 2, after being started in response to a received user operation, a camera application may invoke a camera driver, to obtain image data collected by a camera. The camera application periodically obtains the image data from the camera driver, and period duration of the image data may optionally be the same as or different from a refresh rate of the display screen. This is not limited in this application.

After obtaining the image data, the camera application may send an image processing request to the image compositing system. The request may include information like the image data, to request the image compositing system to perform procedures such as drawing, compositing, and displaying on the image data.

The image compositing system may invoke an image rendering library in a system library in response to the request of the camera application, to draw (or draw and render) the image data.

For example, as shown in FIG. 4, after completing drawing the frame 1, the image rendering library feeds back the drawn frame 1 to the camera application. In response to the obtained frame 1, the camera application determines that drawing of the frame 1 is completed. The camera application sends the frame time line request to the Vsync thread of the image compositing system. The request is used for requesting the Vsync thread to allocate a frame time line (for example, a Vsync signal) to the frame 1. Optionally, the request includes, but is not limited to, identification information (for example, an application package name) of the camera application. This is not limited in this application.

S402: The Vsync thread determines a quantity of frame time lines.

For example, in this embodiment of this application, the Vsync thread may maintain (which may also be understood as storing) a frame time line correspondence table (which is only described by using a list form as an example in this embodiment of this application, and may be in another form in another embodiment, which is not limited in this application). The frame time line correspondence table may include, but is not limited to, a correspondence between identification information (for example, an application package name) of each application and a frame time line selection range.

In this embodiment of this application, a frame time line selection range included in the frame time line of Vsync may include, but is not limited to, three ranges, from small to large, respectively: [1, 3], [4, 6], and [7, ∞). It should be noted that a quantity of selection ranges (for example, three ranges) and specific numerical values in embodiments of this application are merely examples, and may be set based on actual requirements. This is not limited in this application.

In this embodiment of this application, a displayed image layer includes an image stream, and a range corresponding to an application in which image frames in the image stream are not evenly drawn (for example, as shown in FIG. 4) is [7, ∞), to avoid "frame drop" and picture jitter, so as to improve stability of image stream display (where specific effect analysis is described in detail below). For example, a range corresponding to the camera application, the video application, or the like is [7, ∞). A displayed image layer includes an image stream, and a range corresponding to an application in which image frames in the image stream are evenly drawn is [4, 6]. For example, a range corresponding to the game application is [4, 6]. A displayed image does not include an image stream, and it may also be understood as that an image displayed on an image layer is static data, and image frames of the static data are evenly drawn (for example, as shown in FIG. 3). A range corresponding to this type of application is (1, 3]. For example, a range corresponding to the setting application, the chat application, or the like is (1, 3].

In this embodiment, using the camera application as an example (another application is described below), a range corresponding to the camera application is [7, ∞). Correspondingly, the Vsync thread may query the frame time line correspondence table based on the identification information of the camera application carried in the received frame time line request, and determine that the range corresponding to the camera application is [7, ∞). The Vsync thread may select a quantity of frame time lines for the camera application in the range (that is, [7, ∞)).

In a possible implementation, the Vsync thread may select an appropriate quantity of frame time lines within a preset range (that is, [7, ∞)) based on a load status of a current CPU (and/or GPU). For example, when load of the CPU is greater than or equal to 30%, a small value (for example, 7) within the preset range may be selected, to reduce load pressure of the quantity of frame time lines to the CPU as much as possible when a requirement of the camera application for the quantity of frame time lines (for example, greater than 7) is satisfied. For another example, when load of the CPU is small, for example, less than 30%, a large value (for example, 10) within the preset range may be selected.

In this example, an example in which the Vsync thread allocates seven frame time lines to the camera application is used for description.

S503: The Vsync thread obtains the frame time lines.

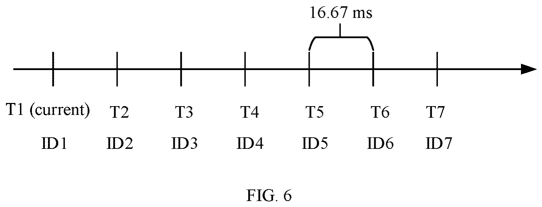

For example, after determining the quantity of frame time lines allocated to the camera application, the Vsync thread may obtain the corresponding quantity of frame time lines. FIG. 6 is a schematic diagram of an example of obtaining a frame time line. With reference to FIG. 6, in this example, an example in which the Vsync thread allocates seven frame time lines to the frame 1 of the camera application is used for description. The Vsync thread selects seven frame time lines by using a start time of an approaching frame time line signal period (that is, a Vsync signal period) as a current time, and based on a current frame rate (that is, each signal period lasts 16.67 ms). As shown in FIG. 6, after completing drawing of the frame 1, the Vsync thread receives the frame time line request sent by the camera application. Therefore, a T1 time is a time corresponding to the start time of the approaching (or may be understood as soon-to-arrive) signal period. The Vsync thread selects seven frame time lines based on the T1 time and the frame rate. Times corresponding to the seven frame time lines are respectively T1, T2, T3, T4, T5, T6, and T7. An interval between two adjacent times (that is, the frame time line) is 16.67 ms (where the frame rate is merely an example, and this is not limited in this application).

For example, the Vsync thread allocates corresponding identification information to each frame time line. For example, identification information corresponding to a frame time line at the T1 time is ID1 (which is merely an example, and this is not limited in this application). The Vsync thread allocates identification information to each frame time line in sequence, namely: ID2 (a time T2), ID3 (a time T3), ID4 (a time T4), ID5 (a time T5), ID6 (a time T6), and ID7 (a time T7).

It should be noted that the "time" in this embodiment of this application is optionally a time starting from when an electronic device is started up. In other words, T may also be understood as startup duration. For example, the time T1 is duration T1 of the startup of the electronic device.

S504: The Vsync thread sends a frame time line response to the camera application.

For example, the Vsync thread sends a frame time line response to the camera application. The response includes, but is not limited to, identification information of each frame time line and a corresponding start time and end time. The end time may also be understood as a start time of an adjacent next frame time line. For example, the response includes a correspondence between ID1, T1, and T2. The correspondence indicates that a start time of a frame time line of ID1 is T1, and an end time of the frame time line is T2.

S505: The camera application selects a target frame time line.

For example, the camera application receives the frame time line response sent by the Vsync thread, and obtains a frame time line allocated by the Vsync thread for a current frame (for example, the frame 1). The response includes identification information (that is, ID), a start time, an end time, and the like of each frame time line.

The camera application may select an appropriate target frame time line for the current frame based on a frame time line corresponding to a compositing procedure of a previous frame, so that there is one signal period between the frame time line corresponding to the compositing procedure of the current frame and the frame time line corresponding to the compositing procedure of the previous frame, to implement integration of compositing of frames. Optionally, the target frame time line indicates to composite a frame, and is, for example, the Vsync-SF described above. This is not limited in this application. Specific examples are described in detail below.

For example, the camera application correspondingly writes identification information of the camera application, related information (including ID, a start time, an end time, and the like) of the selected target frame time line, the frame (for example, the frame 1) that is completely drawn, and the like into a specified area (which is referred to as a frame time line buffer below, or may be referred to as a frame drawing buffer, and this is not limited in this application) in a buffer.

It should be noted that in this example, only the camera application is used as an example. During actual application, a plurality of applications may simultaneously invoke the frame time line, that is, perform procedures such as drawing, compositing, and displaying. Correspondingly, after each application completes drawing and selects a corresponding target frame time line, identification information of the application and the target frame time line (where the target frame time line is selected by the corresponding application, and each application selects a same or different target frame time line for a frame in which drawing is completed. The chat application is used as an example for description below, and details are not described herein.

S506: The Vsync thread wakes up a compositing thread.

For example, Vsync starts to be timed after the electronic device is started up. As described above, the Vsync thread obtains information such as a frame time line and a corresponding start time. The Vsync thread may generate, based on the timing time, a Vsync signal (including signals such as the Vsync-APP signal, the Vsync-SF signal, and the Vsync-HW signal described above) when detecting that the start time of the frame time line is reached.

The compositing thread is woken up after detecting the Vsync signal (specifically, a Vsync-SF signal).

S507: The compositing thread obtains the target frame time line from the camera application.

For example, as described above, the camera application stores the target frame time line in the frame time line buffer. After the compositing thread is woken up, the compositing thread reads the target frame time line from the frame time line buffer. As described above, target frame time lines selected by a plurality of applications may be the same. Only the camera application is used herein as an example for description. If a time (for example, a start time is T1) corresponding to the target frame time line of the camera application that is read by the compositing thread from the frame time line buffer is the same as a current time (that is, T1), the compositing thread obtains, from the frame time line buffer, all target frame time lines (including ID, a start time, an end time, and the like) that are the same as the current time (that is, T1) and corresponding information (including identification information, image frames, and the like of the application) such as the identification information of the camera application and the drawn image frame (for example, the frame 1).

For example, it is assumed that the frame time line buffer includes a target frame time line 1 (including ID, a start time (T1), and an end time) corresponding to the camera application, identification information of the camera application, and a frame A; and a target frame time line 2 (including ID, a start time (T3), and an end time) of the chat application, identification information of the chat application, and a frame B. After the compositing thread is woken up in response to the Vsync-SF signal, the compositing thread determines that a current time is T1. The compositing thread detects, based on the current time, that a start time of the target frame time line 1 in the frame time line buffer is the current time, and determines that a current composition frame time line needs to be allocated to a frame, that is, the frame A, that needs to be composited and that corresponds to the target frame time line 1. The compositing thread obtains the target frame time line (including ID, a start time, and the like) and corresponding information (including the identification information of the camera application, the frame A, and the like) from the frame time line buffer.

S508: The compositing thread performs compositing based on the target frame time line.

Specifically, after the compositing thread obtains the target frame time line of the camera application, an identifier of the camera application, and the image frame (for example, the frame 1), the compositing thread may invoke a hardware compositor or another module to complete compositing the image frame. For a specific compositing procedure, refer to the existing technology. This is not limited in this application.

For example, after completing compositing the image frame, the compositing thread transmits the image frame to the display driver. The display driver displays the image frame within a corresponding frame time line signal period (that is, a next signal period adjacent to a corresponding frame time line during compositing).

For example, the electronic device performs a procedure of S501 to S508 for each frame. To be specific, each time the camera application completes drawing an image frame, S501 is performed, to request to perform a compositing and displaying procedure on the image frame.

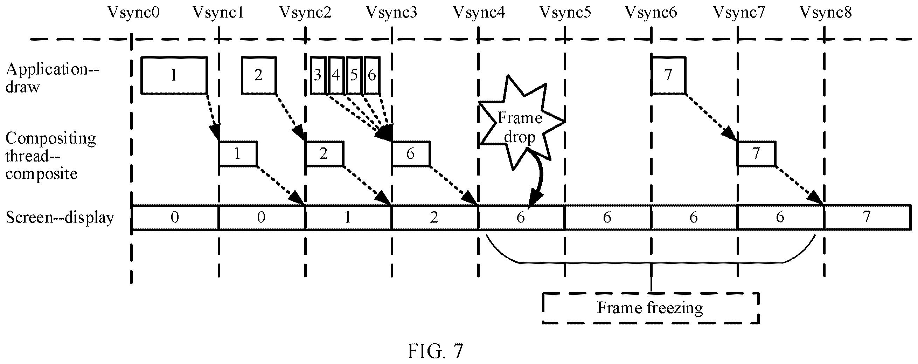

To better describe impact of a quantity of frame time lines on an image stream such as the camera application, the following describes, with reference to a schematic diagram of an interface display processing procedure shown in FIG. 7, a scenario in which the Vsync thread allocates fewer (for example, one) frame time lines to the camera application. With reference to FIG. 7, as described above, an image frame (briefly referred to as a frame) of the camera application may be irregular (that is, uneven). In other words, a start point of frame drawing of image frame may not be at a triggering time of a Vsync signal period (for example, a frame 1), duration of frame drawing may span at least two signal periods (where the solution is described below), and a plurality of frames may be drawn in a same signal period (for example, a frame 3 to a frame 6). Due to the foregoing characteristics of the frame, "frame drop" may occur. As shown in FIG. 7, a frame 1 starts to be drawn (or rendered) after a triggering time of a Vsync0 signal period, and is drawn completely within the Vsync0 signal period. As described above, compositing of the image frame lags behind drawing of the image frame by one signal period, and displaying of the image frame lags behind the compositing of the image frame by one signal period. Correspondingly, the Vsync thread allocates one frame time line (where a Vsync signal is used as an example below, and this is not described again) to the frame 1. To be specific, the Vsync thread feeds back information such as identification information, a start time, and an end time of the Vsync1 signal to the camera application. The Vsync1 is a target frame time line of the frame 1. Correspondingly, the frame 1 is composited at a triggering time of a Vsync1 signal period, and is displayed at a triggering time of a Vsync2 signal period. A frame 2 starts to be drawn (or rendered) after the triggering time of the Vsync1 signal period, and is drawn completely within the Vsync1 signal period. The frame 2 is composited at a triggering time of the Vsync2 signal (that is a target frame time line of the frame 2, for detailed descriptions, refer to the frame 1, details are not described herein again and are not repeatedly described below) period, and is displayed at a triggering time of a Vsync3 signal period. A frame 3 starts to be drawn (or rendered) after the triggering time of the Vsync2 signal period, and is drawn completely within the Vsync2 signal period. After completing drawing the frame 3, the Vsync thread determines that the signal period which is offset from one signal period by a current signal period is the Vsync3 signal period, and feeds back information such as identification information, a start time, and an end time of Vsync3 to the camera application. The Vsync3 is a target frame time line of the frame 3. Correspondingly, the frame 3 is composited at a triggering time of the Vsync3 signal period. It should be noted that in this case, because the Vsync3 signal period is not reached, the compositing thread temporarily does not composite the frame 3, but waits for the Vsync3 signal period to arrive.

After completing drawing a frame 4 (completing drawing within the Vsync2 signal period), the Vsync thread determines that the signal period which is offset from one signal period by a current signal period is the Vsync3 signal period, and feeds back information such as identification information, a start time, and an end time of Vsync3 to the camera application. The Vsync3 is a target frame time line of the frame 4. Correspondingly, the frame 4 is composited at a triggering time of the Vsync3 signal period. It should be noted that in this case, because the Vsync3 signal period is not reached, the compositing thread temporarily does not composite the frame 4, but waits for the Vsync3 signal period to arrive. In this example, the Vsync thread allocates the Vsync3 signal period to the frame 4 for compositing, that is, replaces (or covers) a compositing time of the frame 3. Processing of the frame 5 and the frame 6 is the same as that of the frame 4, and details are not described herein again.

For example, the compositing thread composites the frame 6 at the triggering time of the Vsync3 signal period based on a target frame time line corresponding to the frame 6. After one signal period, that is, within a Vsync4 signal period, a screen displays the frame 6. In other words, the screen displays the frame 2 within the Vsync3 signal period, and displays the frame 6 within an adjacent next signal period (that is, the Vsync4 signal period). This phenomenon is referred to as "frame drop". For example, content displayed within the Vsync3 signal period on a display interface of the camera application is: A first object is at a first position. In reality, an original running track of the first object slides from the first position to a second position and therefore appears at a third position and a fourth position. Because of the "frame drop" (which may also be referred to as "frame skipping"), after displaying that the first object appears at the first position in the display interface of the camera application, the first object in content displayed in a next frame directly appears at the fourth position.

Still with reference to FIG. 7, a frame 7 starts to be drawn in a Vsync6 signal period, and is drawn completely in the signal period. After the frame 6 is drawn, the Vsync thread determines that the signal period which is offset from one signal period by a current signal period is a Vsync7 signal period. Correspondingly, the compositing thread composites the frame 7 at a triggering time of the Vsync7 signal period. The screen displays the frame 7 at the triggering time of the Vsync7 signal period.

Still with reference to FIG. 7, within a Vsync5 signal period to a Vsync7 signal period, because the frame 7 has not been composited yet, "original" data, that is, the frame 6, is always displayed within the Vsync5 signal period to the Vsync7 signal period. From a perspective of a user, displaying a same picture in a plurality of signal periods means "frame freezing". For example, after displaying that the first object appears at the first position on the display interface of the camera application, the first object in content displayed in a next frame directly appears at the fourth position. Moreover, the first object keeps still at the fourth position.

However, in this embodiment of this application, the camera application may select an appropriate frame time line from a plurality (for example, seven) of obtained frame time lines, to prevent frame compositing from being covered because of a described case in which same frames are composited in a same signal period, so that a probability of occurrence of "frame drop" is reduced.

FIG. 8 is a schematic diagram of an example of an interface display processing procedure. With reference to FIG. 8, in this example, a signal period corresponding to drawing of each image frame is the same as that in FIG. 7, to describe technical effects achieved in this embodiment of this application by comparison. Specifically, after completing drawing of the frame 1, the camera application and the Vsync thread perform S401 to S404. For details, refer to the foregoing descriptions. Details are not described herein again.

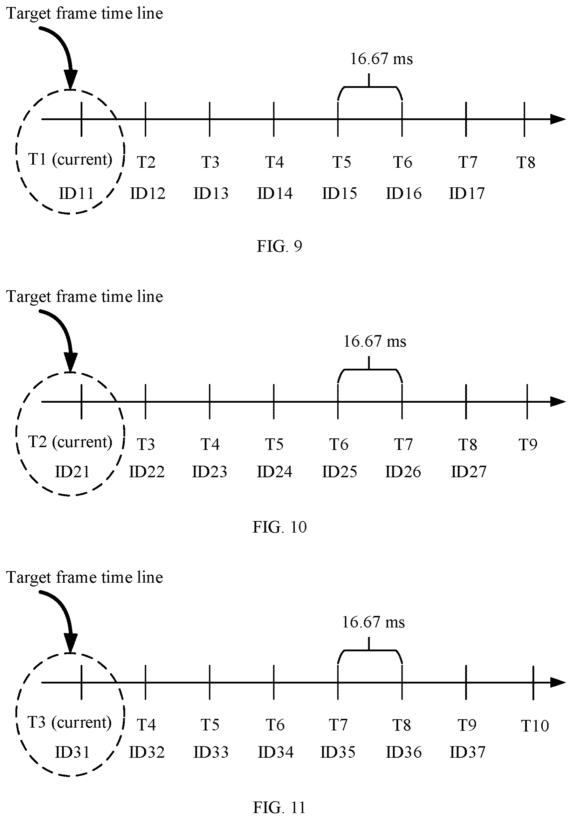

For example, the camera application obtains seven frame time lines allocated by the Vsync thread to the frame 1, as shown in FIG. 9. The seven frame time lines include a first frame time line (ID11, a start time T1, and an end time T2), a second frame time line (ID12, a start time T2, and an end time T3), a third frame time line (ID13, a start time T3, and an end time T4), a fourth frame time line (ID14, a start time T4, and an end time T5), a fifth frame time line (ID15, a start time T5, and an end time T6), a sixth frame time line (ID16, a start time T6, and an end time T7), and a seventh frame time line (ID17, a start time T7, and an end time T8).

Assuming that the frame 1 is a start frame, reference to a previous frame is not necessarily for a target frame time line of the frame 1, and a 1^{st} frame time line may be selected as the target frame time line. To be specific, identification information of the target frame time line of the frame 1 is ID11, the start time is T1, and the end time is T2.

The camera application performs S505. To be specific, that the identification information of the target frame time line of the frame 1 is ID11, the start time is T1, and the end time is T2 is written into a frame time line buffer.

Still with reference to FIG. 8, the Vsync thread generates a Vsync1 signal at the T1 time. The compositing thread is woken up in response to the Vsync1 signal.

After the compositing thread is woken up, the compositing thread determines, based on a current time (that is, T1), that the current time is the composition frame time line of the frame 1. The compositing thread reads, from the frame time line buffer, information that the identification information of the target frame time line is ID11, the start time is T1, the end time is T2, and the like, and information such as an identifier of the camera application and the frame 1.

The compositing thread composites the frame 1 within the Vscyn1 signal period, and stores the composited frame 1 into a buffer (that is referred to as a screen buffer below).

Still with reference to FIG. 8, after the camera application draws the frame 2, the camera application and the Vsync thread perform S401 to S404. For details, refer to the foregoing descriptions. Details are not described herein again.

For example, the camera application obtains seven frame time lines allocated by the Vsync thread to the frame 1, as shown in FIG. 10. The seven frame time lines include a first frame time line (ID21, a start time T2, and an end time T3), a second frame time line (ID22, a start time T3, and an end time T4), a third frame time line (ID23, a start time T4, and an end time T5), a fourth frame time line (ID24, a start time T5, and an end time T6), a fifth frame time line (ID25, a start time T6, and an end time T7), a sixth frame time line (ID26, a start time T7, and an end time T8), and a seventh frame time line (ID27, a start time T8, and an end time T9).

The camera application determines, based on a composition frame time line (that is, the target frame time line of the frame 1) of a previous frame (that is, the frame 1), that a target frame time line of the frame 2 is ID21, and a start time is T2, so that a composition frame time line of the frame 2 is adjacent to the frame time line of the frame 1.

The camera application performs S505, and that the identification information of the target frame time line of the frame 2 is ID21, the start time is T2, and the end time is T3 is written into the frame time line buffer. Optionally, the camera application may delete related information of the target frame time line of the frame 1, and write the related information of the target frame time line of the frame 2. Optionally, the camera application may alternatively write the target frame time line of the frame 2 in a resumption manner, and the compositing thread reads a latest written target frame time line. This is not limited in this application.

Still with reference to FIG. 8, the Vsync thread generates a Vsync2 signal at the T2 time. The compositing thread is woken up in response to the Vsync2 signal.

After the compositing thread is woken up, the compositing thread determines, based on a current time (that is, T2), that the current time is the composition frame time line of the frame 2. The compositing thread reads, from the frame time line buffer, information that the identification information of the target frame time line is ID21, the start time is T2, the end time is T3, and the like, and information such as an identifier of the camera application and the frame 2.

The compositing thread composites the frame 2 within the Vsync2 signal period, and stores the composited frame 2 into a buffer (that is referred to as a screen buffer below).

In addition, the display driver obtains the frame 1 from the screen buffer in response to the Vsync2 signal, and displays the frame 1 within the Vsync2 signal period.

Still with reference to FIG. 8, after the camera application draws the frame 3, the camera application and the Vsync thread perform S401 to S404. For details, refer to the foregoing descriptions. Details are not described herein again.

For example, the camera application obtains seven frame time lines allocated by the Vsync thread to the frame 3, as shown in FIG. 11. The seven frame time lines include a first frame time line (ID31, a start time T3, and an end time T4), a second frame time line (ID32, a start time T4, and an end time T5), a first frame time line (ID33, a start time T5, and an end time T6), a first frame time line (ID34, a start time T6, and an end time T7), a first frame time line (ID35, a start time T7, and an end time T8), a first frame time line (ID36, a start time T8, and an end time T9), and a first frame time line (ID37, a start time T9, and an end time T10).

The camera application determines, based on a composition frame time line (that is, the target frame time line of the frame 2) of a previous frame (that is, the frame 2), that a target frame time line of the frame 3 is ID31, and a start time is T3, so that a composition frame time line of the frame 3 is adjacent to the frame time line of the frame 2.

The camera application performs S505, and that the identification information of the target frame time line of the frame 3 is ID31, the start time is T3, and the end time is T4 is written into the frame time line buffer.

Still with reference to FIG. 8, the Vsync thread generates a Vsync3 signal at the T3 time. The compositing thread is woken up in response to the Vsync3 signal.

After the compositing thread is woken up, the compositing thread determines, based on a current time (that is, T3), that the current time is the composition frame time line of the frame 3. The compositing thread reads, from the frame time line buffer, information that the identification information of the target frame time line is ID31, the start time is T3, the end time is T4, and the like, and information such as an identifier of the camera application and the frame 3.

The compositing thread composites the frame 3 within the Vsync3 signal period, and stores the composited frame 3 into a buffer (that is referred to as a screen buffer below).

In addition, the display driver obtains the frame 2 from the screen buffer in response to the Vsync3 signal, and displays the frame 2 within the Vsync3 signal period.

Still with reference to FIG. 8, after the camera application draws the frame 4, the camera application and the Vsync thread perform S401 to S404. For details, refer to the foregoing descriptions. Details are not described herein again.

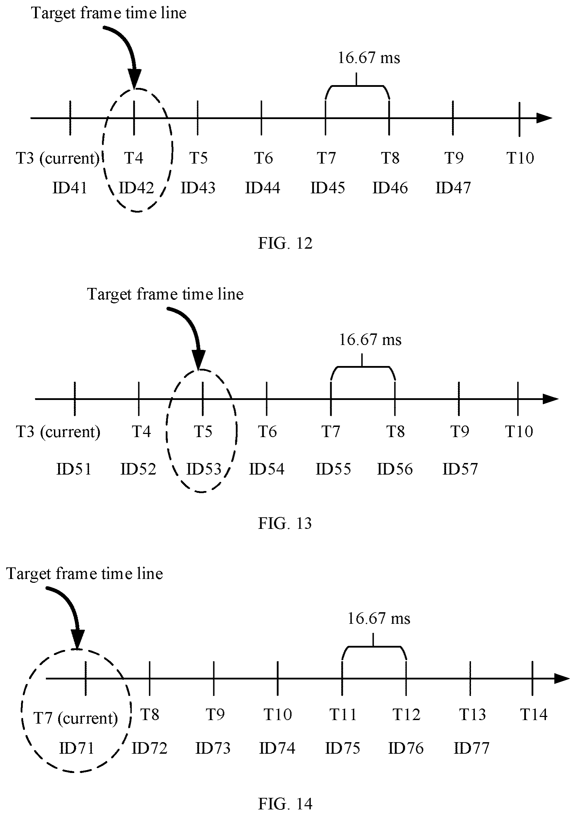

For example, the camera application obtains seven frame time lines allocated by the Vsync thread to the frame 4, as shown in FIG. 12. The seven frame time lines include a first frame time line (ID41, a start time T3, and an end time T4), a second frame time line (ID42, a start time T4, and an end time T5), a first frame time line (ID43, a start time T5, and an end time T6), a first frame time line (ID44, a start time T6, and an end time T7), a first frame time line (ID45, a start time T7, and an end time T8), a first frame time line (ID46, a start time T8, and an end time T9), and a first frame time line (ID47, a start time T9, and an end time T10).

The camera application determines, based on a composition frame time line (that is, the target frame time line of the frame 3) of a previous frame (that is, the frame 3), that a target frame time line of the frame 4 is ID42, and a start time is T4, so that a composition frame time line of the frame 4 is adjacent to the frame time line of the frame 3.

The camera application performs S505, and that the identification information of the target frame time line of the frame 4 is ID42, the start time is T4, and the end time is T5 is written into the frame time line buffer.

Still with reference to FIG. 8, the Vsync thread generates a Vsync4 signal at the T4 time. The compositing thread is woken up in response to the Vsync4 signal.

After the compositing thread is woken up, the compositing thread determines, based on a current time (that is, T4), that the current time is the composition frame time line of the frame 4. The compositing thread reads, from the frame time line buffer, information that the identification information of the target frame time line is ID42, the start time is T4, the end time is T5, and the like, and information such as an identifier of the camera application and the frame 3.

The compositing thread composites the frame 4 within the Vsync4 signal period, and stores the composited frame 4 into a buffer (that is referred to as a screen buffer below).

In addition, the display driver obtains the frame 3 from the screen buffer in response to the Vsync4 signal, and displays the frame 3 within the Vsync4 signal period.

Still with reference to FIG. 8, after the camera application draws the frame 5, the camera application and the Vsync thread perform S401 to S404. For details, refer to the foregoing descriptions. Details are not described herein again.

For example, the camera application obtains seven frame time lines allocated by the Vsync thread to the frame 4, as shown in FIG. 13. The seven frame time lines include a first frame time line (ID51, a start time T3, and an end time T4), a second frame time line (ID52, a start time T4, and an end time T5), a first frame time line (ID53, a start time T5, and an end time T6), a first frame time line (ID54, a start time T6, and an end time T7), a first frame time line (ID55, a start time T7, and an end time T8), a first frame time line (ID56, a start time T8, and an end time T9), and a first frame time line (ID57, a start time T9, and an end time T10).

The camera application determines, based on a composition frame time line (that is, the target frame time line of the frame 4) of a previous frame (that is, the frame 4), that a target frame time line of the frame 5 is ID53, and a start time is T5, so that a composition frame time line of the frame 5 is adjacent to the frame time line of the frame 4.

The camera application performs S505, and that the identification information of the target frame time line of the frame 5 is ID53, the start time is T5, and the end time is T6 is written into the frame time line buffer.

Still with reference to FIG. 8, the Vsync thread generates a Vsync5 signal at the T5 time. The compositing thread is woken up in response to the Vsync5 signal.

After the compositing thread is woken up, the compositing thread determines, based on a current time (that is, T5), that the current time is the composition frame time line of the frame 5. The compositing thread reads, from the frame time line buffer, information that the identification information of the target frame time line is ID53, the start time is T5, the end time is T6, and the like, and information such as an identifier of the camera application and the frame 3.

The compositing thread composites the frame 5 within the Vsync5 signal period, and stores the composited frame 5 into a buffer (that is referred to as a screen buffer below).

In addition, the display driver obtains the frame 4 from the screen buffer in response to the Vsync5 signal, and displays the frame 4 within the Vsync5 signal period.

Processing of the frame 6 is similar to that of the frame 5. Identification information of a target frame time line corresponding to the frame 6 is ID64, and a start time is T6. The compositing thread composites the frame 6 within the Vsync6 signal period. The screen displays the frame 5 within the Vsync6 signal period. For specific details, refer to the foregoing descriptions of the frame 5. Details are not described herein again.

It should be noted that the frame 3 to the frame 6 are all drawn within the Vsync3 signal period. Therefore, when the Vsync thread obtains a frame time line, a 1^{st} determined frame time line is the T3 time.

Still with reference to FIG. 8, after the camera application draws the frame 7, the camera application and the Vsync thread perform S401 to S404. For details, refer to the foregoing descriptions. Details are not described herein again.

For example, the camera application obtains seven frame time lines allocated by the Vsync thread for the frame 7, as shown in FIG. 14. The seven frame time lines include a first frame time line (ID71, a start time T7, and an end time T8), a second frame time line (ID72, a start time T8, and an end time T9), a first frame time line (ID73, a start time T9, and an end time T10), a first frame time line (ID74, a start time T10, and an end time T11), a first frame time line (ID75, a start time T11, and an end time T12), a first frame time line (ID76, a start time T12, and an end time T13), and a first frame time line (ID77, a start time T13, and an end time T14).

The camera application determines, based on a composition frame time line (that is, the target frame time line of the frame 6) of a previous frame (that is, the frame 6), that a target frame time line of the frame 7 is ID71, and a start time is T7, so that a composition frame time line of the frame 7 is adjacent to the frame time line of the frame 6.

The camera application performs S505, and that the identification information of the target frame time line of the frame 7 is ID71, the start time is T7, and the end time is T8 is written into the frame time line buffer.

Still with reference to FIG. 8, the Vsync thread generates a Vsync7 signal at the T7 time. The compositing thread is woken up in response to the Vsync7 signal.

After the compositing thread is woken up, the compositing thread determines, based on a current time (that is, T7), that the current time is the composition frame time line of the frame 7. The compositing thread reads, from the frame time line buffer, information that the identification information of the target frame time line is ID71, the start time is T7, the end time is T8, and the like, and information such as an identifier of the camera application and the frame 3.

The compositing thread composites the frame 7 within the Vsync7 signal period, and stores the composited frame 7 into a buffer (that is referred to as a screen buffer below).

In addition, the display driver obtains the frame 6 from the screen buffer in response to the Vsync7 signal, and displays the frame 6 within the Vsync7 signal period.

For example, the Vsync thread generates a Vsync8 signal at a T8 time. The display driver obtains the frame 7 from the screen buffer in response to the Vsync8 signal, and displays the frame 7 within a Vsync8 signal period.

In this embodiment of this application, the Vsync thread allocates sufficient frame time lines to each image frame of the camera application, to meet a requirement of the camera application, so that integration of compositing of the image frames is implemented, the compositing of the image frames can be evenly allocated to each signal period, and further, the screen can display the image frames according to a drawing order of the image frames, to avoid a "frame drop".

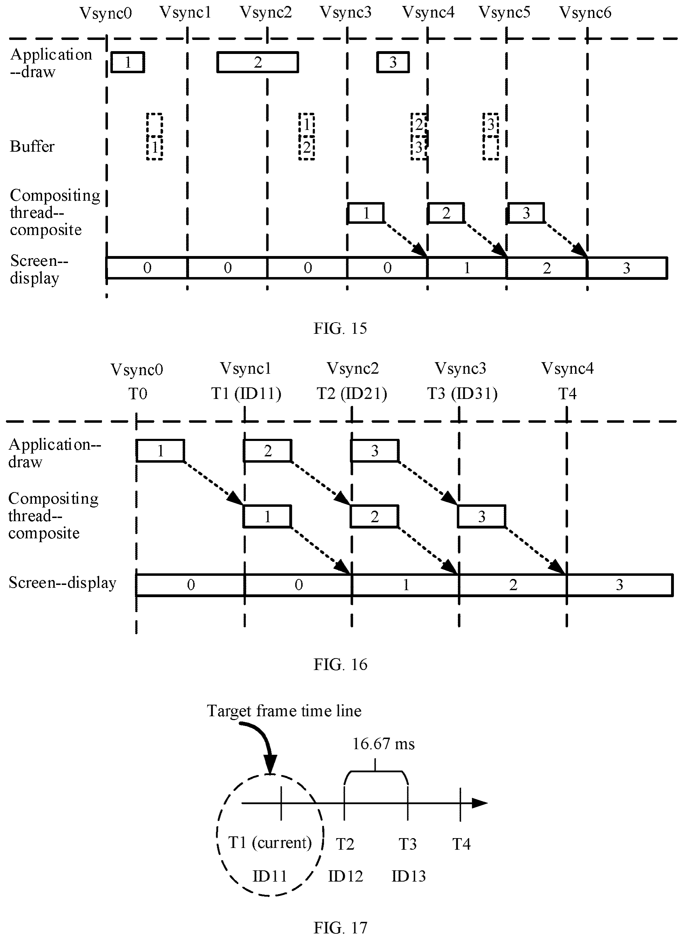

In a possible implementation, as shown in FIG. 15, the electronic device may further include a drawing frame buffer, configured to store at least two drawing frames. In this embodiment, an example in which a storage upper limit is two completely drawn frames is used for description. In this example, after drawing of the frame 1 is completed, the frame 1 is stored into the drawing frame buffer, and the camera application temporarily does not trigger S401. After drawing of the frame 2 is completed, the frame 2 is written into the drawing frame buffer, and the camera application triggers S401. In other words, in this example, when the Vsync thread obtains a frame time line corresponding to the frame 1, a start time corresponding to a 1^{st} frame time line is a start time of an adjacent frame time line signal period after drawing of the frame 2 is completed, for example, the T3 time. Correspondingly, the T3 time is a start time corresponding to the frame time line of the ID11. Processing of other frames is the same as that of the frame 1. Details are not described herein again. In this example, if there are frames that are drawn across a plurality of signal periods, for example, a drawing procedure of the frame 2 occupies the Vsync2 signal period and the Vsync3 signal period, compositing of the frame 1 may start from the T3 time, to avoid frame freezing (to be specific, if the frame 1 is composited from the T2 time, and because the frame 2 is not composited yet within the Vsync2 signal period, the frame 1 is displayed in both the Vsyn1 signal period and the Vsync2 signal period).

The following uses a chat application as an example for description. It should be noted that a display processing procedure of the chat application may be performed simultaneously with the camera application. For example, an interface of the camera application and an interface of the chat application are simultaneously displayed on a display interface of a mobile phone in a manner such as a split screen manner or a floating window manner, and image frames of the chat application and the camera application are both drawn, composited, and displayed. The display processing procedure corresponding to the chat application is the same as that of the camera application. For details, refer to descriptions in FIG. 5. Details are not described herein again.

For example, FIG. 16 is a schematic diagram of an example of an interface display processing procedure of a chat application. With reference to FIG. 16, after completing drawing the frame 1, the chat application and the Vsync thread perform S401 to S404. For details, refer to the foregoing descriptions. Details are not described herein again.

For example, a frame time line selection range corresponding to the chat application is (1, 3]. In this embodiment, the Vsync thread allocates three frame time lines to the chat application. As shown in FIG. 17, the three frame time lines allocated by the Vsync thread to the frame 1 of the chat application are respectively a frame time line (whose starting time is T1 and whose end time is T2) corresponding to ID11, a frame time line (whose start time is T2 and whose end time is T3) corresponding to ID12, and a frame time line (whose start time is T3 and whose end time is T4) corresponding to ID13.

The chat application obtains the three frame time lines allocated by the Vsync thread to the frame 1, as shown in FIG. 17. As described above, data of the chat application is static data, to be specific, a signal period occupied by the data during drawing is even. Correspondingly, the chat application may determine a 1^{st} frame time line (for example, the ID11) in the three frame time lines as a target frame time line.

The chat application performs S505, and writes that identification information of the target frame time line of the frame 1 is ID11, a start time is T1, and an end time is T2 into a frame time line buffer.

Still with reference to FIG. 16, the Vsync thread generates a Vsync1 signal at the T1 time. The compositing thread is woken up in response to the Vsync1 signal.

After the compositing thread is woken up, the compositing thread determines, based on a current time (that is, T1), that the current time is the composition frame time line of the frame 1. The compositing thread reads, from the frame time line buffer, information that the identification information of the target frame time line is ID11, the start time is T1, the end time is T2, and the like, and information such as an identifier of the camera application and the frame 1.

The compositing thread composites the frame 1 within the Vsync1 signal period, and stores the composited frame 1 into a buffer (that is referred to as a screen buffer below).

Processing of the frame 2 and the frame 3 is the same as that of the frame 1, and a 1^{st} frame time line is selected as a target frame time line. The frame 1, the frame 2, and the frame 3 are respectively displayed in a Vsync2 signal period to a Vsync4 signal period on the screen.

For example, as described above, the chat application and the camera application may perform the procedure in FIG. 4 simultaneously, quantities of obtained frame time lines are different, and the selected target frame time line may be the same or may be different.

For example, the Vsync thread may receive a frame time line request that is of the camera application and that corresponds to a frame 4 (the frame 4 of the camera application) and a frame time line request that is of the chat application and that corresponds to a frame 3 (the frame 3 of the chat application) simultaneously or sequentially, but both the frame time line request and the frame time line request are received within a same signal period. The Vsync thread allocates seven frame time lines to the camera application and three frame time lines to the chat application. The camera application selects a frame time line at a T4 time as a target frame time line for the frame 4, and the chat application selects a frame time line at a T3 time as a target frame time line. Therefore, for requests received in a same signal period, target frame time lines selected by different applications may be the same or may be different. This is not limited in this application. For other undescribed parts, refer to the foregoing descriptions. Details are not described herein again.

In conclusion, in this embodiment of this application, the Vsync thread may allocate a corresponding quantity of frame time lines to an application based on an application requirement. For example, for the camera application, the Vsync thread allocates a large quantity (for example, seven or more) of frame time lines to the camera application, and the camera application may select an appropriate frame time line from a sufficient quantity of frame time lines based on a drawing status of a frame, to implement integration of compositing of the frames. In this way, the compositing of each frame is evenly distributed in different signal periods, so that the screen displays frames according to a frame order, thereby avoiding "frame drop". For the chat application, drawn frames of the chat application are evenly distributed in each signal period, and correspondingly, compositing of the frames is also evenly distributed. Therefore, for this type of application in which frame drop may not occur, the Vsync thread allocates fewer (for example, three or less) frame time lines to the application, to reduce calculation and transmission overheads. For example, for the camera application, the Vsync thread calculates related information of seven frame time lines for each frame, and feeds back the related information corresponding to seven or more frame time lines to the camera application. For the chat application, the Vsync thread calculates only related information of less than three frame time lines for each frame, and feeds back the related information corresponding to three or less frame time lines to the chat application.

In this embodiment of this application, the Vsync thread may allocate a corresponding quantity of frame time lines to an application based on different use scenarios of the application.

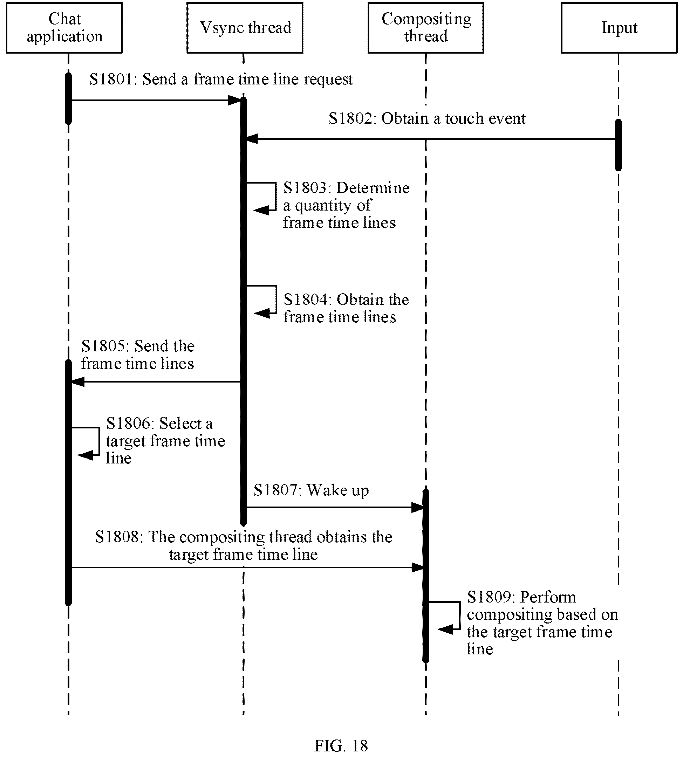

In a possible implementation, the Vsync thread determines a corresponding quantity of frame time lines for an application based on a touch operation on the application. FIG. 18 is a schematic flowchart of an example of an image processing method. With reference to FIG. 18, the method includes but is not limited to the following steps.

S1801: A chat application sends a frame time line request to a Vsync thread.

For specific descriptions, refer to S501. Details are not described herein again.

S1802: The Vsync thread obtains a touch event.

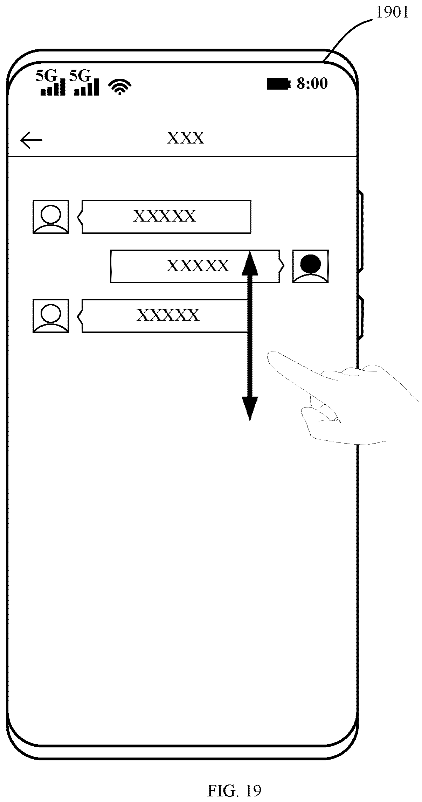

For example, the Vsync thread may register in advance with an input module to monitor the touch event, so that the Input sends the touch event to the Vsync thread if obtaining a slide event, to indicate that the slide-touch event occurs on a current interface (that is, an interface of a chat application). For example, as shown in FIG. 19, the interface of the chat application is displayed in an interface 2001, and a user may slide the interface up and down, to browse different content in the application. In a process in which the user slides the interface, drawing of corresponding image frames is optionally unevenly distributed, for example, as shown in FIG. 8.

S1803: The Vsync thread determines a quantity of frame time lines.

For example, in combination with the touch event, a frame time line correspondence table maintained by the Vsync thread may be used to determine a corresponding frame time line quantity range when the application corresponds to different touch events.

For example, in the frame time line correspondence table, a selection range corresponding to the chat application is [1, 3], and a selection range corresponding to the chat application and the slide event is [7, ∞). To be specific, in a process of the interface display of the chat application, if the slide event does not occur, a corresponding selection range of the chat application is [1, 3], and if the slide event occurs, a corresponding selection range is [7, ∞).

In this example, the Vsync thread determines that the slide event occurs on the interface of the chat application. Correspondingly, the Vsync thread allocates seven frame time lines to an image frame of the chat application.

For descriptions of S1804 to S1809, refer to S504 to S509. Details are not described herein again.

FIG. 10 is a schematic diagram of an example of interface display processing procedure. With reference to FIG. 10, at a T0 time and a T2 time, data of the chat application is static data, that is, drawing of each frame is evenly distributed. Correspondingly, for a processing procedure of the chat application and the Vsync thread, refer to descriptions in FIG. 16. Details are not described herein again. For example, the slide event occurs within a Vsync2 signal period to a Vsync7 signal period. Correspondingly, after completing drawing a frame 4, in response to a frame time line request of the chat application based on the obtained slide event, the Vsync thread allocates seven frame time lines to each of the frame 4 to a frame 8 of the chat application, so that compositing procedures of the frame 4 to the frame 8 are evenly distributed within different signal periods. For specific processing procedures of the frame 4 to a frame 9, refer to related descriptions of FIG. 8. Details are not described herein again.

In another possible implementation, an interface of some applications may include an image stream. For example, an interface of a news application optionally includes static data (such as text news) and dynamic data (such as a dynamic advertisement or a video). In this example, a frame time line request sent by the news application to the Vsync thread may include image layer information, and the image layer information indicates that content on the image layer is information about dynamic data (that is, an image stream).

For example, the Vsync thread may determine, based on the image layer information, that an image frame of the news application includes an image stream. Correspondingly, the Vsync thread may allocate a large quantity (for example, seven) of frame time lines to the image frame including the image stream.

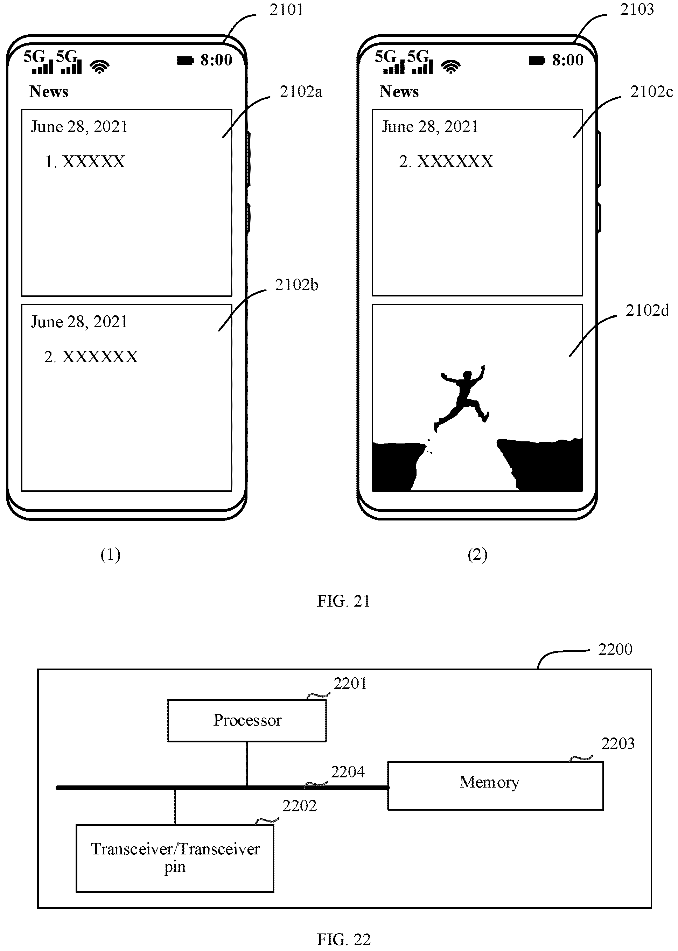

For example, as shown in (1) of FIG. 21, a display interface 2101 includes an image layer 2102a and an image layer 2102b. The image layer 2102a and the image layer 2102b include static data, that is, text news. For example, after drawing of a frame 1 corresponding to display interface 2101 is completed, the news application sends a frame time line request to the Vsync thread. The request includes first image layer information of the image layer 2102a and second image layer information of the image layer 2102b. The first image layer information and the second image layer information both indicate that a corresponding image layer includes static data. Correspondingly, the Vsync thread allocates three frame time lines to the frame 1 of the news application based on the first image layer information and the second image layer information. For details, refer to related descriptions in FIG. 16. Details are not described herein again.

As shown in (2) of FIG. 21, the news application displays a display interface 2103 in response to a received user operation. The display interface 2103 includes, but is not limited to, an image layer 2102c and an image layer 2102d. The image layer 2102c includes static data, that is, text news. The image layer 2102d includes dynamic data, for example, a video stream. For example, after drawing of a frame 2 corresponding to display interface 2103 is completed, the news application sends a frame time line request to the Vsync thread. The request includes third image layer information of the image layer 2102c and fourth image layer information of the image layer 2102d. The third image layer information indicates that a corresponding image layer includes static data, and the fourth image layer information indicates that a corresponding image layer includes dynamic data. Correspondingly, the Vsync thread determines, based on the third image layer information and the fourth image layer information, that the frame 2 of the news application includes the dynamic data, and the Vsync thread allocates seven frame time lines to the frame 2. For details, refer to related descriptions in FIG. 8. Details are not described herein again.

It may be understood that to implement the foregoing functions, the electronic device includes corresponding hardware and/or software modules for performing the functions. Algorithm steps in the examples described with reference to embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions with reference to embodiments for each particular application, but it should not be considered that the implementation goes beyond the scope of this application.

In an example, FIG. 22 is a schematic block diagram of an apparatus 2200 according to an embodiment of this application. The apparatus 2200 may include a processor 2201 and a transceiver/transceiver pin 2202, and optionally may further include a memory 2203.

Components of the apparatus 2200 are coupled together by using a bus 2204. In addition to a data bus, the bus 2204 may further include a power bus, a control bus, a status signal bus, and the like. However, for clear description, various types of buses in the figure are all referred to as the bus 2204.

Optionally, the memory 2203 may be configured for instructions in the foregoing method embodiments. The processor 2201 may be configured to execute instructions in the memory 2203, control a receive pin to receive a signal, and control a transmit pin to send a signal.

The apparatus 2200 may be the electronic device in the foregoing method embodiments of this application or a chip in the electronic device.

All related content of the steps in the foregoing method embodiments may be cited in function descriptions of corresponding functional modules. Details are not described herein again.

An embodiment further provides a computer storage medium. The computer storage medium stores computer instructions. When the computer instructions are run on an electronic device, the electronic device is enabled to perform the foregoing related methods and steps, to implement the method in the foregoing embodiments.

An embodiment further provides a computer program product. When the computer program product runs on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the method in the foregoing method embodiments.

The electronic device, the computer storage medium, the computer program product, or the chip provided in embodiments may be configured to perform the corresponding method provided above. Therefore, for beneficial effects that can be achieved, refer to the beneficial effects of the corresponding method provided above. Details are not described herein again.

The foregoing embodiments are merely intended for describing the technical solutions of this application, but are not intended to limit this application. Although this application are described in detail with reference to the foregoing embodiments, a person of ordinary skill in the art is to understand that modifications may still be made to the technical solutions described in the foregoing embodiments, or equivalent replacements may be made to the part of the technical features; and these modifications or replacements will not cause the essence of corresponding technical solutions to depart from the scope of the technical solutions of embodiments of this application.

## Claims

1. An image processing method, comprising:
drawing, by a first application, a first image frame;
sending, by the first application, a first compositing request to an image compositing system after completing drawing the first image frame;
allocating, by the image compositing system, N1 frame time lines frame time lines to the first application at a first time in response to the first compositing request, wherein any two adjacent frame time lines in the N1 frame time lines are separated by a vertical synchronization Vsync period corresponding to the first application, and a start time of a 1^{st} frame time line in the N1 frame time lines is after the first time;
selecting, by the first application, a first target frame time line from the N1 frame time lines, wherein a start time of the first target frame time line is a second time;
obtaining, by the image compositing system, the first target frame time line and the first image frame;
compositing, by the image compositing system, the first image frame based on the first target frame time line at the second time;
drawing, by a second application, a second image frame;
sending, by the second application, a second compositing request to the image compositing system after completing drawing the second image frame;
allocating, by the image compositing system, M1 frame time lines to the second application at a third time in response to the second compositing request, wherein any two adjacent frame time lines in the M1 frame time lines are separated by a Vsync period corresponding to the second application, and a start time of a 1^{st} frame time line in the M1 frame time lines is after the third time, wherein N1 is a positive integer within a first preset range, M1 is a positive integer within a second preset range, and a minimum value of the first preset range is greater than a maximum value of the second preset range;
selecting, by the second application, a second target frame time line from the M1 frame time lines, wherein a start time of the second target frame time line is a fourth time;
obtaining, by the image compositing system, the second target frame time line and the second image frame; and
compositing, by the image compositing system, the second image frame based on the second target frame time line at the fourth time.

2. The method according to claim 1, wherein the method further comprises:
drawing, by the first application, a third image frame;
sending, by the first application, a third compositing request to the image compositing system after completing drawing the third image frame;
allocating, by the image compositing system, N2 frame time lines to the first application at a fifth time in response to the third compositing request, wherein any two adjacent frame time lines in the N2 frame time lines are separated by the Vsync period corresponding to the first application, a start time of a 1^{st} frame time line in the N2 frame time lines is the same as the start time of the 1^{st} frame time line in the N1 frame time lines, and N2 is a positive integer within the first preset range;
selecting, by the first application, a third target frame time line from the N2 frame time lines, wherein a start time of the third target frame time line is a sixth time;
obtaining, by the image compositing system, the third target frame time line and the third image frame; and
compositing, by the image compositing system, the third image frame based on the third target frame time line at the sixth time.

3. The method according to claim 2, wherein the third target frame time line is adjacent to the second target frame time line.

4. The method according to claim 3, wherein the method further comprises:
displaying, by a screen, the first image frame at the sixth time; and
displaying, by the screen, the third image frame at a seventh time, wherein an interval between the seventh time and the sixth time is the Vsync period corresponding to the first application.

5. The method according to claim 1, wherein the method further comprises:
drawing, by a third application, a fourth image frame;
sending, by the third application, a fourth compositing request to the image compositing system after completing drawing the fourth image frame;
allocating, by the image compositing system, P frame time lines to the third application at an eighth time in response to the fourth compositing request, wherein any two adjacent frame time lines in the P frame time lines are separated by a Vsync period corresponding to the third application, and a start time of a 1^{st} frame time line in the P frame time lines is after the eighth time, wherein P is a positive integer within a third preset range, the minimum value of the first preset range is greater than a maximum value of the third preset range, and a minimum value of the third preset range is greater than the maximum value of the second preset range;
selecting, by the third application, a fourth target frame time line from the P frame time lines, wherein a start time of the fourth target frame time line is a ninth time;
obtaining, by the image compositing system, the fourth target frame time line and the fourth image frame; and
compositing, by the image compositing system, the fourth image frame based on the fourth target frame time line at the ninth time.

6. The method according to claim 1, wherein the method further comprises:
drawing, by the second application, a fifth image frame;
sending, by the second application, a fifth compositing request to the image compositing system after completing drawing the fifth image frame;
obtaining, by the image compositing system, a slide-touch event;
allocating, by the image compositing system, M2 frame time lines to the second application at a tenth time in response to the fifth compositing request and the slide-touch event, wherein any two adjacent frame time lines in the M2 frame time lines are separated by the Vsync period corresponding to the second application, a start time of a 1^{st} frame time line in the M2 frame time lines is after the tenth time, and M2 is a positive integer within the first preset range;
selecting, by the second application, a fifth target frame time line from the M2 frame time lines, wherein a start time of the fifth target frame time line is an eleventh time;
obtaining, by the image compositing system, the fifth target frame time line and the fifth image frame; and
compositing, by the image compositing system, the fifth image frame based on the fifth target frame time line at the eleventh time.

7. The method according to claim 1, wherein the method further comprises:
drawing, by the second application, a sixth image frame;
sending, by the second application, a sixth compositing request to the image compositing system after completing drawing the sixth image frame;
at a twelfth time, detecting, by the image compositing system in response to the sixth compositing request, whether the sixth image frame comprises dynamic image data;
allocating M3 frame time lines to the second application if the sixth image frame comprises the dynamic image data, wherein any two adjacent frame time lines in the M3 frame time lines are separated by the Vsync period corresponding to the second application, a start time of a 1^{st} frame time line in the M3 frame time lines is after the twelfth time, and M3 is an integer within the first preset range;
allocating M4 frame time lines to the second application if the sixth image frame does not comprise the dynamic image data, wherein any two adjacent frame time lines in the M4 frame time lines are separated by the Vsync period corresponding to the second application, a start time of a 1^{st} frame time line in the M4 frame time lines is after the twelfth time, and M4 is an integer within the second preset range;
selecting, by the second application, a sixth target frame time line from the M3 frame time lines or the M4 frame time lines, wherein a start time of the sixth target frame time line is a thirteenth time;
obtaining, by the image compositing system, the sixth target frame time line and the sixth image frame; and
compositing, by the image compositing system, the sixth image frame based on the sixth target frame time line at the thirteenth time.

8. The method according to any one of claims 1 to 7, wherein the first application is a video application or a camera application, and the second application is a news application.

9. The method according to any one of claims 1 to 8, wherein the minimum value of the first preset range is 7, and the maximum value of the second preset range is 3.

10. An electronic device, comprising:
one or more processors and a memory; and
one or more computer programs, wherein the one or more computer programs are stored in the memory, and when the computer programs are executed by the one or more processors, the electronic device is enabled to perform the following steps:
drawing a first image frame of a first application;
allocating N1 frame time lines frame time lines to the first application at a first time, wherein any two adjacent frame time lines in the N1 frame time lines are separated by a vertical synchronization Vsync period corresponding to the first application, and a start time of a 1^{st} frame time line in the N1 frame time lines is after the first time;
selecting a first target frame time line from the N1 frame time lines, wherein a start time of the first target frame time line is a second time;
compositing the first image frame based on the first target frame time line at the second time;
drawing a second image frame of a second application;
allocating M1 frame time lines to the second application at a third time, wherein any two adjacent frame time lines in the M1 frame time lines are separated by a Vsync period corresponding to the second application, and a start time of a 1^{st} frame time line in the M1 frame time lines is after the third time, wherein N1 is a positive integer within a first preset range, M1 is a positive integer within a second preset range, and a minimum value of the first preset range is greater than a maximum value of the second preset range;
selecting a second target frame time line from the M1 frame time lines, wherein a start time of the second target frame time line is a fourth time; and
compositing the second image frame based on the second target frame time line at the fourth time.

11. The electronic device according to claim 10, wherein when the computer programs are executed by the one or more processors, the electronic device is enabled to perform the following steps:
drawing a third image frame of the first application;
allocating N2 frame time lines to the first application at a fifth time, wherein any two adjacent frame time lines in the N2 frame time lines are separated by the Vsync period corresponding to the first application, a start time of a 1^{st} frame time line in the N2 frame time lines is the same as the start time of the 1^{st} frame time line in the N1 frame time lines, and N2 is a positive integer within the first preset range;
selecting a third target frame time line from the N2 frame time lines, wherein a start time of the third target frame time line is a sixth time; and
compositing the third image frame based on the third target frame time line at the sixth time.

12. The electronic device according to claim 11, wherein the third target frame time line is adjacent to the second target frame time line.

13. The electronic device according to claim 12, wherein when the computer programs are executed by the one or more processors, the electronic device is enabled to perform the following steps:
displaying the first image frame at the sixth time; and
displaying the third image frame at a seventh time, wherein an interval between the seventh time and the sixth time is the Vsync period corresponding to the first application.

14. The electronic device according to claim 10, wherein when the computer programs are executed by the one or more processors, the electronic device is enabled to perform the following steps:
drawing a fourth image frame of the second application;
obtaining a slide-touch event;
allocating M2 frame time lines to the second application at an eighth time, wherein any two adjacent frame time lines in the M2 frame time lines are separated by the Vsync period corresponding to the second application, a start time of a 1^{st} frame time line in the M2 frame time lines is after the eighth time, and M2 is a positive integer within the first preset range;
selecting a fourth target frame time line from the M2 frame time lines, wherein a start time of the fourth target frame time line is a ninth time; and
compositing the fourth image frame based on the fourth target frame time line at the ninth time.

15. The electronic device according to claim 10, wherein when the computer programs are executed by the one or more processors, the electronic device is enabled to perform the following steps:
drawing a fifth image frame of the second application;
detecting, at a tenth time, whether the fifth image frame comprises dynamic image data;
allocating M3 frame time lines to the second application if the fifth image frame comprises the dynamic image data, wherein any two adjacent frame time lines in the M3 frame time lines are separated by the Vsync period corresponding to the second application, a start time of a 1^{st} frame time line in the M3 frame time lines is after the tenth time, and M3 is an integer within the first preset range;
allocating M4 frame time lines to the second application if the fifth image frame does not comprise the dynamic image data, wherein any two adjacent frame time lines in the M4 frame time lines are separated by the Vsync period corresponding to the second application, a start time of a 1^{st} frame time line in the M4 frame time lines is after the tenth time, and M4 is an integer within the second preset range;
selecting a fifth target frame time line from the M3 frame time lines or the M4 frame time lines, wherein a start time of the fifth target frame time line is an eleventh time; and
compositing the fifth image frame based on the fifth target frame time line at the eleventh time.

16. A computer storage medium, comprising computer instructions, wherein when the computer instructions are run on an electronic device, the electronic device is enabled to perform the method according to any one of claims 1 to 9.

17. A computer program product, wherein when the computer program product runs on a computer, the computer is enabled to perform the method according to any one of claims 1 to 9.
